(19) Europäisches Patentamt
European Patent Office
Office européen des brevets

(11) **EP 4 636 110 A1**

(12) **EUROPEAN PATENT APPLICATION**
published in accordance with Art. 153(4) EPC

(43) Date of publication:
**22.10.2025 Bulletin 2025/43**

(51) International Patent Classification (IPC):
**C22C 38/00** *(2006.01)* **C21D 9/46** *(2006.01)*
**C22C 38/60** *(2006.01)*

(21) Application number: **23903591.8**

(22) Date of filing: **15.12.2023**

(52) Cooperative Patent Classification (CPC):
**C21D 9/46; C22C 38/00; C22C 38/60**

(86) International application number:
**PCT/JP2023/045025**

(87) International publication number:
**WO 2024/128312 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022 JP 2022200162**

(71) Applicant: **NIPPON STEEL CORPORATION**
**Chiyoda-ku**
**Tokyo 100-8071 (JP)**

(72) Inventors:
• **ISHIKAWA, Kyohei**
**Tokyo 100-8071 (JP)**
• **YOKOYAMA, Takafumi**
**Tokyo 100-8071 (JP)**
• **TAKEDA, Kengo**
**Tokyo 100-8071 (JP)**

(74) Representative: **Zimmermann & Partner**
**Patentanwälte mbB**
**P.O. Box 330 920**
**80069 München (DE)**

(54) **STEEL SHEET AND MANUFACTURING METHOD FOR STEEL SHEET**

(57) A steel sheet has a predetermined chemical composition, in a microstructure at a 1/4 depth position, the total of area ratios of ferrite and bainite is 0% to 60%, an area ratio of martensite is 40% to 100%, and the total of area ratios of pearlite and residual austenite is 0% to 10%, and in a surface layer part, a number density of carbides containing B and having a minor axis of 0.2 $\mu$m or more is 0.0030 particles/$\mu$m$^2$ or less.

**Description**

TECHNICAL FIELD

The present invention relates to a steel sheet and a manufacturing method of the steel sheet.
Priority is claimed on Japanese Patent Application No. 2022-200162, filed on December 15, 2022, the content of which is incorporated herein by reference.

BACKGROUND ART

With regard to steel sheets for a vehicle, in order to reduce a weight of a vehicle body and improve fuel efficiency in consideration of the global environment, there is a significantly increasing demand for high strength steel sheets having a small sheet thickness and excellent formability. Among the steel sheets for a vehicle, particularly for high strength steel sheets used for vehicle body frame components, high strength is required, and furthermore, high formability for wide applications is required.
In addition, since vehicle components are formed by pressing or the like, the vehicle components are required to have excellent formability (for example, bendability) even with high strength.
As such a high strength steel sheet, Patent Document 1 discloses a high strength steel sheet having a thickness middle part and a surface layer part formed on one side or both sides of the thickness middle part, in which, in a cross section of the high strength steel sheet, a microstructure of the thickness middle part includes, by area ratio, tempered martensite: 85% or more, one or two or more of ferrite, bainite, pearlite, and residual austenite: less than 15% in total, and quenched martensite: less than 5%, a microstructure of the surface layer part includes, by area ratio, ferrite: 65% or more, pearlite: 5% or more and less than 20%, one or two or more of tempered martensite, bainite, and residual austenite: less than 10% in total, and quenched martensite: less than 5%, a thickness of the surface layer part formed on one side or both sides is more than 10 $\mu$m and is 15% or less of a sheet thickness, an average interval between the pearlite and the pearlite in the surface layer part is 3 $\mu$m or more, and Vickers hardness (Hc) of the thickness middle part and Vickers hardness (Hs) of the surface layer part satisfy $0.50 \leq Hs/He \leq 0.75$.

Citation List

Patent Document

Patent Document 1: PCT International Publication No. WO2020/196060

SUMMARY OF INVENTION

Technical Problem

In an impact absorbing member for a vehicle, post-pressing collapse properties are also important from the viewpoint of energy absorption during a collision. In the high strength steel sheet as in Patent Document 1, B is added for high-strengthening. B is added to improve the hardenability of steel as a solid solution B and to achieve high-strengthening. However, in a case where B is added, a coarse carbide containing B may be formed in the steel. In a case where the coarse carbide containing B is formed during the manufacturing process, it is difficult to re-dissolve the carbide until the time when final hardening is performed and the solid solution B is deficient during hardening, so that the achievement of high-strengthening is hindered. Furthermore, the coarse carbide containing B that remains in a final product promotes the generation of voids during press working and collapse deformation of the member, which serve as origins where cracks start to occur in the member. As a result, there is a concern that the collapse properties (deformation limit) of the member may be reduced. Therefore, it is required to suppress the formation of the coarse carbide containing B not only in a final product but also in the manufacturing process.
The present invention has been contrived in view of the above-described circumstances, and an object thereof is to provide a steel sheet having high strength, excellent bendability, and excellent post-pressing collapse properties, and a manufacturing method of the steel sheet.

Solution to Problem

The present inventors have studied ways to ensure the post-press forming crushing properties by the following method. B is fixed as relatively fine precipitates at the end of hot rolling and a heat treatment of a hot-rolled steel sheet, that is, immediately before a cold rolling step. Therefore, B and C are not bonded to each other in a hot rolling step, and the generation of a coarse carbide containing B is suppressed. Next, the precipitates containing B are dissolved during a heat treatment after cold rolling to increase the amount of a solid solution B. Therefore, hardenability for ensuring the post-press forming crushing properties of a final product is ensured.

As a result, the present inventors have found that, in steel in which the amounts of B, Ti, Al, and N are appropriately controlled, in a case where B is fixed mainly as a B nitride until the end of hot rolling, and the B nitride is dissolved and N is fixed as AlN in a heat treatment after cold rolling, it is possible to avoid the precipitation of the B nitride and the generation of the coarse B carbide in the course of cooling during the heat treatment after cold rolling.

The present invention has been contrived in view of the above findings. The gist of the present invention is as described below.

[1] A steel sheet containing, as a chemical composition, by mass%:

C: 0.07% to 0.25%;
Si: 0.01% to 2.00%;
Mn: 1.5% to 3.5%;
Al: 0.001% to 2.000%;
B: 0.0003% to 0.0100%;
P: 0.100% or less;
S: 0.0500% or less;
N: 0.0005% to 0.0100%;
O: 0.0060% or less;
Cr: 0% to 2.000%;
Mo: 0% to 1.000%;
W: 0% to 1.000%;
Co: 0% to 0.500%;
Nb: 0% to 0.50%;
Ti: 0% to 0.5000%;
V: 0% to 0.500%;
Ta: 0% to 0.100%;
Sn: 0% to 0.050%;
Sb: 0% to 0.050%;
As: 0% to 0.050%;
Ni: 0% to 1.000%;
Cu: 0% to 1.000%;
Ca: 0% to 0.050%;
Zr: 0% to 0.0500%;
Mg: 0% to 0.050%;
REM: 0% to 0.100%, and
a remainder containing Fe and impurities,
in which the chemical composition satisfies Expressions (1), (2), (3), and (4),
in a case where an N content in the chemical composition is denoted by Total. N and an N content in nitrides is denoted by $N_{nit}$, Expression (5) is satisfied,
in a microstructure at a 1/4 depth position that is a position away from a surface by 1/4 of a sheet thickness along a sheet thickness direction, by area ratio,
a total of ferrite and bainite is 0% to 60%,
martensite is 40% to 100%, and
a total of pearlite and residual austenite is 0% to 10%, and
in a case where a region from the surface to 30 $\mu$m along the sheet thickness direction is defined as a surface layer part, in the surface layer part,
a number density of carbides containing B and having a minor axis of 0.2 $\mu$m or more is 0.0030 particles/$\mu$m$^2$ or less.

$$ex. N = [N] - [Ti]/3.4 > 0.0000 \text{ mass\%} ...(1)$$

$$ex. N - 14/27 \times [Al] < 0.000 \text{ mass\%} ...(2)$$

$$[B] -10.8/14 \times ex.\ N < 0.0003\ \text{mass\%...(3)}$$

$$[Al] - 0.01 \times ex.\ N^{-0.849} < 0.000\ \text{mass\%...(4)}$$

$$\text{Total. N} - N_{nit} \le 0.0005\ \text{mass\%...(5)}$$

In Expressions (1), (2), (3), and (4), each of [N], [Ti], [Al], and [B] denotes an amount of the corresponding element by mass%, and is substituted with 0 in a case where the corresponding element is not contained.

[2] The steel sheet according to [1], in which, in a microstructure of the surface layer part, by area ratio, a total of ferrite and bainite is 2% or more, and a total of one or two or more of martensite, pearlite, and residual austenite is 0% to 98%, and

Hs/Hc that is a ratio of Vickers hardness Hs of the surface layer part to Vickers hardness He of the 1/4 depth position is 0.65 or less.

[3] The steel sheet according to [1] or [2], in which a number density of AlN in the surface layer part is 0.01 particles/$\mu$m$^2$ or more.

[4] The steel sheet according to any one of [1] to [3], in which a tensile strength is 980 MPa or more.

[5] The steel sheet according to any one of [1] to [4],

in which the chemical composition contains, by mass%, one or two or more of
Cr: 0.001% to 2.000%,
Mo: 0.010% to 1.000%,
W: 0.001% to 1.000%,
Co: 0.010% to 0.500%,
Nb: 0.01% to 0.50%,
Ti: 0.0001% to 0.5000%,
V: 0.001% to 0.500%,
Ta: 0.001% to 0.100%,
Sn: 0.001% to 0.050%,
Sb: 0.001% to 0.050%,
As: 0.001% to 0.050%,
Ni: 0.001% to 1.000%,
Cu: 0.001% to 1.000%,
Ca: 0.001% to 0.050%,
Zr: 0.0001% to 0.0500%,
Mg: 0.001% to 0.050%, and
REM: 0.001% to 0.100%.

[6] The steel sheet according to any one of [1] to [5], in which a hot-dip galvanized layer is provided on the surface.
[7] The steel sheet according to any one of [1] to [5], in which a hot-dip galvannealed layer is provided on the surface.
[8] A manufacturing method of a steel sheet including:

a hot rolling step of heating a slab containing, as a chemical composition, by mass%,
C: 0.07% to 0.25%;
Si: 0.01% to 2.00%;
Mn: 1.5% to 3.5%;
Al: 0.001% to 2.000%;
B: 0.0003% to 0.0100%;
P: 0.100% or less;
S: 0.0500% or less;
N: 0.0005% to 0.0100%;
O: 0.0060% or less;
Cr: 0% to 2.000%;
Mo: 0% to 1.000%;
W: 0% to 1.000%;
Co: 0% to 0.500%;
Nb: 0% to 0.50%;

Ti: 0% to 0.5000%;

V: 0% to 0.500%;

Ta: 0% to 0.100%;

Sn: 0% to 0.050%;

Sb: 0% to 0.050%;

As: 0% to 0.050%;

Ni: 0% to 1.000%;

Cu: 0% to 1.000%;

Ca: 0% to 0.050%;

Zr: 0% to 0.0500%;

Mg: 0% to 0.050%;

REM: 0% to 0.100%, and

a remainder containing Fe and impurities, the chemical composition satisfying Expressions (1), (2), (3), and (4), and performing hot rolling under a condition in which a total time in a temperature range of 950°C to 700°C is 5 s or longer to obtain a hot-rolled steel sheet;

a coiling step of coiling the hot-rolled steel sheet at a coiling temperature of 600°C to 450°C after the hot rolling step;

a cold rolling step of performing cold rolling on the hot-rolled steel sheet with a sheet thickness reduction of 20% to 80% after the coiling step to obtain a cold-rolled steel sheet; and

an annealing step of annealing the cold-rolled steel sheet by raising a temperature to an annealing temperature of 740°C to 900°C in an atmosphere having a dew point of -40°C to 20°C after the cold rolling step so that an average rising rate in a temperature range of 550°C to 650°C is 0.5 to 5.0 °C/s.

$$ex.\ N = [N] - [Ti]/3.4 > 0.0000\ mass\%...(1)$$

$$ex.\ N - 14/27 \times [Al] < 0.000\ mass\%...(2)$$

$$[B] - 10.8/14 \times ex.\ N < 0.0003\ mass\%...(3)$$

$$[Al] - 0.01 \times ex.\ N^{-0.849} < 0.000\ mass\%...(4)$$

In Expressions (1), (2), (3), and (4), each of [N], [Ti], [Al], and [B] denotes an amount of the corresponding element by mass%, and is substituted with 0 in a case where the corresponding element is not contained.

Advantageous Effects of Invention

According to the aspect of the present invention, it is possible to provide a steel sheet having high strength, excellent bendability, and excellent post-pressing collapse properties, and a manufacturing method of the steel sheet.

DESCRIPTION OF EMBODIMENTS

The chemical composition and microstructure of a steel sheet according to an embodiment of the present invention (hereinafter, may be simply referred to as the steel sheet according to the present embodiment), and a manufacturing method capable of manufacturing the steel sheet will be described in detail below.

The steel sheet according to the present embodiment is applied not only to a steel sheet with no plating layer on a surface thereof but also to a base metal of a steel sheet with a plating layer formed on a surface thereof. Here, the "base metal" is a part mainly including Fe in a thickness middle region of a plated steel sheet from which a plating layer has been removed (a part excluding the plating layer). Such a plated steel sheet includes, for example, a hot-dip galvanized steel sheet having a hot-dip galvanized layer on a surface thereof and a hot-dip galvannealed steel sheet having a hot-dip galvannealed layer on a surface thereof, and main conditions described below are common to the base metal of the hot-dip galvanized steel sheet, the hot-dip galvannealed steel sheet, or the like.

<Chemical Composition>

First, the chemical composition of the steel sheet according to the present embodiment will be described. The symbol "%" indicating an amount of each element in the chemical composition means mass% unless otherwise specified.

The numerical limit range described below with "to" includes the lower limit and the upper limit. Numerical values indicated as "less than" or "more than" do not fall within the numerical range.

[C: 0.07% to 0.25%]

Carbon (C) is an essential element for high-strengthening of the steel sheet. In a case where the C content is less than 0.07%, a sufficient tensile strength cannot be obtained. Therefore, the C content is set to 0.07% or more. The C content is preferably 0.11% or more.

On the other hand, in a case where the C content is more than 0.25%, weldability decreases and bendability deteriorates. In addition, a coarse carbide is formed, and thus the post-press working collapse properties deteriorate. Therefore, the C content is set to 0.25% or less. The C content is preferably 0.20% or less from the viewpoint of suppressing a deterioration in press formability and weldability.

[Si: 0.01% to 2.00%]

Silicon (Si) is a solid solution strengthening element and is an effective element for high-strengthening of the steel sheet. In order to obtain the above effect, the Si content is set to 0.01% or more. The Si content is preferably 0.30% or more.

On the other hand, in a case where Si is excessively contained, the steel sheet is embrittled, and manufacturability and workability decrease. Therefore, the Si content is set to 2.00% or less. The Si content is preferably 1.50% or less.

[Mn: 1.5% to 3.5%]

Mn is an element that has an action of improving the hardenability of steel and is effective for obtaining a desired microstructure. In a case where the Mn content is less than 1.5%, a desired microstructure cannot be obtained, and strength deteriorates. Therefore, the Mn content is set to 1.5% or more. The Mn content is preferably 2.0% or more.

On the other hand, in a case where the Mn content is more than 3.5%, even in a case where the generation of a coarse B carbide is suppressed, ferrite in the surface layer is not sufficiently generated, and bending deformability decreases. Therefore, the post-press working collapse properties deteriorate. Therefore, the Mn content is set to 3.5% or less. The Mn content is preferably 3.0% or less.

[Al: 0.001% to 2.000%]

Al is an element that has a deoxidizing action on steel and is an element that forms AlN by bonding to N. In the steel sheet according to the present embodiment, a sufficient amount of AlN is formed in a final product, which acts to suppress B fixation by N, that is, the formation of BN and to sufficiently exhibit the hardening effect due to a solid solution B. That is, it is necessary to satisfy Expression (2) shown below as will be described later. In order to obtain the above effect, the Al content is set to 0.001% or more. The Al content is preferably 0.005% or more.

On the other hand, in a case where Al is excessively contained, the effect is saturated, and the cost increases. In addition, AlN cannot be solutionized in the stage of heating in hot rolling, and a solid solution N for fixing the solid solution B cannot be ensured. As a result, the post-press working collapse properties deteriorate. Therefore, the Al content is set to 2.000% or less. The Al content is preferably 1.500% or less.

In the present embodiment, the Al content means a so-called total Al (T-Al) content.

[B: 0.0003% to 0.0100%]

B is an element that increases hardenability to suppress the transformation of austenite into ferrite and pearlite in a cooling process and promote the generation of a low temperature transformation structure such as bainite or martensite. In addition, B is an element useful for high-strengthening of the steel sheet. In a case where the B content is less than 0.0003%, strength of the steel sheet decreases. Therefore, the B content is set to 0.0003% or more, The B content is preferably 0.0005% or more or 0.0010% or more.

On the other hand, in a case where the B content is more than 0.0100%, a coarse B oxide or boride is generated in steel. The coarse B oxide may become origins where voids start to form during deformation, and the workability (deformation limit) of the steel sheet may deteriorate. Therefore, the B content is set to 0.0100% or less. The B content is preferably 0.0070% or less, 0.0050% or less, or 0.0030% or less.

[P: 0.100% or Less]

P is an element that segregates at grain boundaries, thereby embrittling steel and deteriorating bendability.

Therefore, the P content is preferably as small as possible and may be 0%.

In a case where the P content is more than 0.100%, P segregates at grain boundaries of martensite, and grain boundary embrittlement occurs. Therefore, cracks are likely to occur during press working and cracks are likely to develop during bending deformation due to collapse, and thus the post-press working collapse properties deteriorate. Therefore, the P content is set to 0.100% or less. The P content is preferably 0.020% or less, and more preferably 0.010% or less.

[S: 0.0500% or Less]

S is an element that forms a sulfide-based inclusion and deteriorates bendability. Therefore, the S content is preferably as small as possible and may be 0%.

In a case where the S content is more than 0.0500%, coarse MnS is generated, cracks are likely to occur during press working, and cracks are likely to develop along the interface between MnS and the primary phase during bending deformation due to collapse. Thus, the post-press working collapse properties deteriorate. Therefore, the S content is set to 0.0500% or less. The S content is preferably 0.0100% or less, more preferably 0.0030% or less, and still more preferably 0.0020% or less.

[N: 0.0005% to 0.0100%]

N is an element that forms nitrides such as BN and AlN in the steel sheet. In a case where the N content is more than 0.0100%, workability significantly deteriorates due to the nitride. In addition, since coarse AlN and TiN are generated and cracks are likely to occur during press working, the post-press working collapse properties deteriorate. Therefore, the N content is set to 0.0100% or less. The N content may be 0.0090% or less, 0.0080% or less, or 0.0070% or less.

On the other hand, in a case where the N content is set to less than 0.0005%, the manufacturing cost increases significantly. In addition, in some cases, BN, AlN, and the like cannot be generated in the steel sheet. Therefore, the N content is set to 0.0005% or more. The N content may be set to 0.0010% or more.

[O: 0.0060% or Less]

O is an element that forms a coarse oxide in steel and deteriorates bendability and hole expansibility. In a case where the O content is more than 0.0060% a coarse Al oxide is generated, and cracks are likely to occur during press working. Therefore, the post-press working collapse properties deteriorate. Therefore, the O content is set to 0.0060% or less. The O content may be 0.0050% or less, 0.0040% or less, or 0.0030% or less.

Since the O content is preferably as small as possible, it may be 0%. However, from the economic perspective, it is not preferable that the O content be less than 0.0001% due to an excessive increase in cost. Therefore, the O content may be set to 0.0001% or more. The O content may be set to 0.0010% or more.

The chemical composition of the steel sheet according to the present embodiment may contain the above elements and a remainder of Fe and impurities. Here, the impurities are elements that are mixed in from a raw material such as ore or a scrap or due to a variety of factors in manufacturing steps during industrial manufacturing of steel and are allowed to an extent that the properties of the steel sheet according to the present embodiment are not adversely affected. The impurities also include elements that are not intentionally added to the steel sheet.

The steel sheet according to the present embodiment may further contain the following elements (optional elements) to improve the various properties. Since these elements do not necessarily need to be contained, the lower limits thereof in content are 0%. In addition, even in a case where the following elements are contained as impurities, the effects of the steel sheet according to the present embodiment are not impaired as long as the elements are contained within ranges to be described later.

[Cr: 0% to 2.000%]

Cr is an element that increases hardenability and is effective in high-strengthening of the steel sheet. Therefore, Cr may be contained in steel. For the high-strengthening of the steel sheet by increasing the hardenability by Cr, the Cr content is preferably 0.001% or more. On the other hand, in a case where the Cr content is more than 2.000%, Cr may segregate at a center part of the steel sheet and form a coarse Cr carbide, and the cold formability may be decreased. Therefore, the Cr content is set to 2.000% or less.

[Mo: 0% to 1.000%]

Mo is an effective element for reinforcing the steel sheet. Therefore, Mo may be contained in steel. For the high-strengthening of the steel sheet by Mo, the Mo content is preferably 0.010% or more. On the other hand, in a case where the Mo content is more than 1.000%, the cost increases and a coarse Mo carbide is formed, which may decrease the cold workability of the steel sheet. Therefore, the Mo content is set to 1.000% or less.

[W: 0% to 1.000%]

W is an element that forms a carbide and is an effective element for high-strengthening of the steel sheet. Therefore, W may be contained in steel. In order to obtain the above-described effect, the W content is preferably 0.001% or more. The W content is more preferably 0.005% or more. The W content is still more preferably 0.010% or more.
On the other hand, even in a case where W is excessively contained, the effect is saturated, and the cost increases. Therefore, in a case where W is contained, the W content is set to 1.000% or less. The W content is more preferably 0.100% or less.

[Co: 0% to 0.500%]

Co is an effective element for improving strength of the steel sheet. Therefore, Co may be contained in steel. In order to obtain the above-described effect, the Co content is preferably 0.010% or more, and more preferably 0.050% or more. On the other hand, in a case where the Co content is too large, there is a concern that ductility of the steel sheet may decrease, leading to a decrease in hole expansibility and bendability. Therefore, the Co content is set to 0.500% or less. The Co content is more preferably 0.300% or less.

[Nb: 0% to 0.50%]

Since Nb is an effective element for controlling the morphology of carbide and the inclusion of Nb refines the structure, it is also an effective element for improving the toughness of the steel sheet. Therefore, Nb may be contained in steel. In order to obtain the effects of Nb, the Nb content is preferably set to 0.01% or more. On the other hand, in a case where the Nb content is more than 0.50%, a large number of coarse Nb carbides are precipitated, which become origins where voids start during press forming, and the workability of the steel sheet may deteriorate. Therefore, the Nb content is set to 0.50% or less.

[Ti: 0% to 0.5000%]

Ti is an element that is important in controlling the morphology of sulfide, carbide, and nitride, and is an element that promotes an increase in strength of ferrite by being contained in a large amount. In general, in high strength steel sheets containing B and utilizing martensite, such as the steel sheet according to the present embodiment, Ti is actively contained, and thus a Ti nitride is formed, which suppresses the formation of B nitride and secures an improvement in hardenability by ensuring of a solid solution B. However, in the steel sheet according to the present embodiment, it is assumed that B is precipitated as a nitride at a certain point in manufacturing steps, and the inclusion of Ti is not essential. From the viewpoint of promoting the formation of a B nitride as described above, the Ti content is preferably as small as possible and may be 0%. In the present embodiment, as will be described later, it is necessary to satisfy Expression (1) to ensure a solid solution N necessary for bonding to the solid solution B in the stage of hot rolling.
On the other hand, in a case where the Ti content is more than 0.5000%, a coarse Ti oxide or TiN may be present in steel, thereby decreasing the workability of the steel sheet. Therefore, the Ti content is set to 0.5000% or less. The Ti content is preferably less than 0.0340%.

[V: 0% to 0.500%]

Since V is an effective element for controlling the morphology of carbide and the inclusion of V refines the structure, it is also an effective element for improving the toughness of the steel sheet. Therefore, V may be contained in steel. In order to obtain the effects of V, the V content is preferably 0.001% or more. On the other hand, in a case where the V content is more than 0.500%, a large number of fine V carbides may be precipitated, which increases strength of the steel sheet and significantly deteriorates ductility, resulting in a decrease in workability. Therefore, the V content is set to 0.500% or less.

[Ta: 0% to 0.100%]

Ta is an effective element for controlling the morphology of carbide and improving strength of the steel sheet. Therefore, Ta may be contained in steel. In order to obtain the above-described effect, the Ta content is preferably 0.001% or more. On the other hand, in a case where the Ta content is too large, a large number of fine Ta carbides may be precipitated, which may cause a decrease in ductility of the steel sheet, resulting in a decrease in hole expansibility and bendability of the steel sheet. Therefore, the Ta content is set to 0.100% or less. The Ta content is more preferably 0.020% or less. The Ta content is still more preferably 0.010% or less.

[Sn: 0% to 0.050%]

Sn is an element that can be contained in the steel sheet in a case where a scrap is used as a raw material of the steel sheet. In addition, Sn may cause a decrease in hole expansibility and bendability of the steel sheet due to the embrittlement of ferrite. Therefore, the Sn content is preferably as small as possible. The Sn content is set to preferably 0.050% or less, and more preferably 0.040% or less. The Sn content may be 0%. From the viewpoint of decreasing the refining cost, the Sn content may be set to 0.001% or more.

[Sb: 0% to 0.050%]

Similar to Sn, Sb is an element that can be contained in the steel sheet in a case where a scrap is used as a raw material of the steel sheet. Sb is likely to segregate at grain boundaries, and may cause the embrittlement of the grain boundaries, a decrease in ductility, and a decrease in hole expansibility and bendability. Therefore, the Sb content is preferably as small as possible. The Sb content is set to preferably 0.050% or less, and more preferably 0.040% or less. The Sb content may be 0%. From the viewpoint of decreasing the refining cost, the Sb content may be set to 0.001% or more.

[As: 0% to 0.050%]

Similar to Sn and Sb, As is an element that can be contained in the steel sheet in a case where a scrap is used as a raw material of the steel sheet. As is likely to segregate at grain boundaries, and may cause a decrease in hole expansibility and bendability. Therefore, the As content is preferably as small as possible. The As content is set to preferably 0.050% or less, and more preferably 0.040% or less. The As content may be 0%. From the viewpoint of decreasing the refining cost, the As content may be set to 0.001% or more.

[Ni: 0% to 1.000%]

Ni is an effective element for improving strength of the steel sheet. Therefore, Ni may be contained in steel. In order to obtain the above-described effect, the Ni content is preferably 0.001% or more. The Ni content is more preferably 0.010% or more. On the other hand, in a case where the Ni content is too large, ductility of the steel sheet may decrease, and thus hole expansibility and bendability may decrease. Therefore, the Ni content is set to 1.000% or less. The Ni content is preferably 0.800% or less.

[Cu: 0% to 1.000%]

Cu is an element that contributes to an improvement in strength of the steel sheet. Therefore, Cu may be contained in steel. In order to obtain the above-described effect, the Cu content is preferably 0.001% or more. However, in a case where the Cu content is too large, red shortness may occur and the productivity in hot rolling may decrease. Furthermore, in a case where the Cu content is too large, hole expansibility and bendability may decrease due to the formation of a coarse inclusion. Therefore, the Cu content is set to 1.000% or less. The Cu content is preferably 0.500% or less.

[Ca: 0% to 0.050%]

Ca is an element that can control the morphology of sulfide with a small amount. Therefore, Ca may be contained in steel. In order to obtain the above-described effect, the Ca content is preferably 0.001% or more. However, in a case where the Ca content is too large, a coarse Ca oxide may be generated. The Ca oxide become origins where cracks start during cold forming, and as a result, hole expansibility and bendability may deteriorate. Therefore, the Ca content is set to 0.050% or less. The Ca content is preferably 0.030% or less.

[Zr: 0% to 0.0500%]

Zr is an element that can control the morphology of sulfide with a small amount. Therefore, Zr may be contained in steel. In order to obtain the above-described effect, the Zr content is preferably 0.0001% or more. However, in a case where the Zr content is too large, a coarse Zr oxide may be generated, and hole expansibility and bendability may decrease. Therefore, the Zr content is set to 0.0500% or less. The Zr content is preferably 0.0400% or less.

[Mg: 0% to 0.050%]

Mg is an element that controls the morphologies of sulfide and oxide and contributes to an improvement in bendability of the steel sheet. Therefore, Mg may be contained in steel. In order to obtain the above-described effect, the Mg content is preferably 0.001% or more. However, in a case where the Mg content is too large, hole expansibility and bendability may decrease due to the formation of a coarse inclusion. Therefore, the Mg content is set to 0.050% or less. The Mg content is preferably 0.040% or less.

[REM: 0% to 0.100%]

REM stands for rare earth metal (rare earth element). REM is an element that effectively acts to control the morphology of sulfide even in a case where the amount thereof is small. Therefore, REM may be contained in steel. In order to obtain the above-described effect, the REM content is preferably 0.001% or more. However, in a case where the REM content is too large, the workability, fracture resistance, hole expansibility, and bendability may decrease due to the generation of a coarse REM oxide. Therefore, the REM content is set to preferably 0.100% or less, and more preferably 0.050% or less.

Here, REM is a generic term for two elements of scandium (Sc) and yttrium (Y) and 15 elements (lanthanoids) from lanthanum (La) to lutetium (Lu). The "REM" mentioned in the present embodiment includes one or more selected from these rare earth elements, and the "REM content" is the total amount of the rare earth elements.

$$[ex.N = [N] - [Ti]/3.4 > 0.0000\ Mass\%]$$

The chemical composition of the steel sheet according to the present embodiment satisfies Expression (1). As described above, in high strength steel sheets containing B and utilizing martensite, such as the steel sheet according to the present embodiment, in general, a Ti nitride is formed, which suppresses the formation of B nitride and secures an improvement in hardenability by ensuring of a solid solution B. Therefore, Ti is contained in an excessive amount with respect to the N content. However, in a case where there is a large amount of a solid solution B in the steel sheet before cold rolling, a coarse carbide containing B is formed in the coiling of the hot-rolled steel sheet or in a subsequent heat treatment. In a case where the coarse carbide containing B remains in a final product, the post-pressing collapse properties deteriorate. In a case where the chemical composition of the steel sheet according to the present embodiment satisfies Expression (1), BN can be precipitated in a temperature range in which finish rolling is performed. Therefore, it is possible to reduce the amount of a solid solution B in the course of cooling the hot-rolled steel sheet. In addition, it is possible to suppress the formation of a coarse carbide in the hot-rolled steel sheet immediately before cold rolling. The value (ex. N) of the middle side in Expression (1) is preferably 0.0010 mass% or more, and more preferably 0.0030 mass% or more. The upper limit thereof is not particularly limited, but may be set to 0.1000 mass% or less, 0.0100 mass% or less, or 0.0070 mass% or less.

$$ex.\ N = [N] - [Ti]/3.4 > 0.0000\ mass\%...(1)$$

[ex. N - 14/27 × [Al] < 0.000 Mass%]

The chemical composition of the steel sheet according to the present embodiment satisfies Expression (2). Al is bonded to N to form AlN. In a case where BN formed before cold rolling is decomposed by annealing after cold rolling and Expression (2) is satisfied, N generated by the decomposition of BN is bonded to Al to form AlN. Therefore, it is possible to improve the hardenability by the solid solution B during annealing after cold rolling. The value of the left side in Expression (2) is preferably -0.030 mass% or less or -0.050 mass% or less. The lower limit thereof is not particularly limited, but may be set to -0.300 mass% or more, -0.200 mass% or more, or - 0.100 mass% or more.

$$ex.\ N - 14/27 \times [Al] < 0.000\ mass\%...(2)$$

[[B] - 10.8/14 × ex. N < 0.0003 Mass%]

The chemical composition of the steel sheet according to the present embodiment satisfies Expression (3). In a case where Expression (3) is satisfied, it is possible to promote the formation of BN during hot rolling and until immediately before cold rolling subsequent to the hot rolling, and it is possible to reduce the amount of the solid solution B in the steel sheet. Therefore, it is possible to suppress the formation of a coarse carbide containing B in the hot-rolled steel sheet, and thus it is possible to further improve the post-pressing collapse properties. The value of the left side in Expression (3) is preferably -0.0005 mass% or less or -0.0010 mass% or less. The lower limit thereof is not particularly limited, but may be set to -0.0030 mass% or more or -0.0020 mass% or more.

$$[B] - 10.8/14 \times ex. \, N < 0.0003 \, mass\% ...(3)$$

$$[[Al] - 0.01 \times ex. \, N^{-0.849} < 0.000 \, Mass\%]$$

The chemical composition of the steel sheet according to the present embodiment satisfies Expression (4). In a case where Al is excessively contained, the formation of AlN is promoted and the formation of BN is thus suppressed in the thermal history during the manufacturing of the hot-rolled steel sheet. This becomes a cause for the formation of a coarse carbide containing B in the hot-rolled steel sheet, which is likely to cause a decrease in workability or the like in a final product. In a case where the chemical composition of the steel sheet according to the present embodiment satisfies Expression (4), the formation of BN before the subsequent cold rolling step is promoted, and the concern about the occurrence of the above problems can be further reduced.

$$[Al] - 0.01 \times ex. \, N^{-0.849} < 0.000 \, mass\% ...(4)$$

In Expressions (1), (2), (3), and (4), each of [N], [Ti], [Al], and [B] denotes an amount of the corresponding element by mass%. and is substituted with 0 in a case where the corresponding element is not contained. In addition, ex. N in Expressions (2), (3), and (4) is ex. N in Expression (1).

$$[Total. \, N - N_{nit} \leq 0.0005 \, Mass\%]$$

In the steel sheet according to the present embodiment, as shown in Expression (5), a value obtained by subtracting the N content ($N_{nit}$) in the nitride from the N content (Total. N) is 0.0005 mass% or less. The nitride includes BN, AlN, TiN, and the like. The value of the left side in Expression (5) is more preferably 0.0003 mass% or less. In a case where Expression (5) is satisfied, the hardenability improvement effect due to the solid solution B can be sufficiently obtained in the annealing after cold rolling.

$$Total. \, N - N_{nit} \leq 0.0005 \, mass\% ...(5)$$

The chemical composition of the steel sheet according to the present embodiment can be obtained by the following method.

The chemical composition of the steel sheet described above may be measured using a general chemical composition. For example, the chemical composition may be measured using inductively coupled plasma-atomic emission spectrometry (ICP-AES). In addition, C and S may be measured using a combustion-infrared absorption method, N may be measured using an inert gas fusion-thermal conductivity method, and O may be measured using an inert gas fusion-nondispersive infrared absorption method.

In a case where the steel sheet is provided with a plating layer on a surface thereof, the chemical composition may be analyzed after removing the plating layer by mechanical grinding. Regarding the boundary between the plating layer and the steel sheet, a C concentration is measured in the sheet thickness direction of the steel sheet using glow discharge optical emission spectrometry (GDS), and a position where the C concentration in a range of 200 $\mu$m deep in the sheet thickness direction from the point at which the detection of C is started is at a minimum value is determined as the boundary between the plating layer and the steel sheet. In the following description, the term "surface (of the steel sheet)" refers to the above-described boundary being regarded as the "surface (of the steel sheet)" in a steel sheet having a plating layer on a surface thereof.

The N content ($N_{nit}$) in the nitride is measured by the following method. A sample collected from the steel sheet is subjected to constant potential electrolysis, and then subjected to filtering and separation using a Nuclepore membrane having a pore size of 0.2 $\mu$m to collect a residue. As described in JIS G 1228: 2006, the residue obtained by electrolysis is changed into a solution using potassium sulfate and sulfuric acid, and subjected to ammonia distillation separation bis (1-phenyl-3-methyl5-pyrazolone) absorption photometry to quantify the amount of nitrogen. The obtained amount of nitrogen is regarded as the N content ($N_{nit}$) in the nitride.

A concentration difference may be formed in the sheet thickness direction in the steel sheet according to the present embodiment, but for the chemical composition, the measurement sample is collected to include a surface layer part from a 1/4 depth in the sheet thickness direction, and 1 g or more of an electrolytic amount is ensured.

<Microstructure of 1/4 Depth Position>

Next, the microstructure at a 1/4 depth position (a position away from the surface by 1/4 of the sheet thickness along the sheet thickness direction) in the steel sheet according to the present embodiment will be described.

In the description of the microstructure of the steel sheet according to the present embodiment, microstructural fractions are indicated by area ratios. Accordingly, unless otherwise specified, "%" represents "area%".

In the steel sheet according to the present embodiment (including a steel sheet, a hot-dip galvanized steel sheet, and a hot-dip galvannealed steel sheet), the microstructure at a 1/4 depth position (a position away from the surface by 1/4 of the sheet thickness along the sheet thickness direction) includes, by area ratio, 0% to 60% of ferrite and bainite in total, 40% to 100% of martensite, and 0% to 10% of pearlite and residual austenite in total.

[Total of Area Ratios of Ferrite and Bainite Is 0% to 60%]

Ferrite is a soft phase generated by performing dual phase annealing or performing slow cooling after holding in the annealing step. In a case where ferrite is mixed with a hard phase such as martensite, ductility of the steel sheet is improved. However, in order to achieve a strength as high as 980 MPa or more, it is necessary to limit the area ratio of ferrite.

In addition, bainite is a phase generated by holding at 350°C to 450°C for a certain period of time during cooling after holding in the annealing step. Bainite is softer than martensite, and thus has an effect for improvement of ductility. However, in order to achieve a strength as high as 980 MPa or more, it is necessary to limit the area ratio of bainite as in the case of ferrite.

Therefore, the total of the area ratios of ferrite and bainite is set to 60% or less. The total of the area ratios of ferrite and bainite is preferably 40% or less. Since ferrite and bainite may not be contained, the lower limits thereof in area ratio are 0%. In addition, the area ratio of each of ferrite and bainite is not limited.

[Area Ratio of Martensite Is 40% to 100%]

The area ratio of martensite is 40% to 100%. Since martensite is a hard structure, it contributes to an improvement in tensile strength. In order to obtain a desired strength, the area ratio of martensite is set to 40% or more. The area ratio of martensite is preferably 80% or more, and more preferably 90% or more. Therefore, high tensile strength (for example, a tensile strength of 1470 MPa or more) is easily ensured. From the viewpoint of obtaining high strength, the area ratio of martensite may be 100%.

In the present embodiment, the "martensite" refers to fresh martensite and tempered martensite. Fresh martensite is martensite containing no iron-based carbide. In addition, the "tempered martensite" is martensite containing an iron-based carbide.

From the viewpoint of toughness, hole expansibility, and ductility, the tempered martensite fraction is desirably high, but the area ratio of each of fresh martensite and tempered martensite is not limited. The degree of tempering may be adjusted within a general range according to the required strength, toughness, hole expansibility, and ductility level.

[Total of Area Ratios of Pearlite and Residual Austenite Is 0% to 10%]

Pearlite is a hard structure in which soft ferrite and hard cementite are arranged in layers, and is a structure that contributes to an improvement in tensile strength of the steel sheet. In addition, residual austenite is a structure that contributes to an improvement in elongation by transformation induced plasticity (TRIP). Since pearlite and residual austenite may not be contained, the lower limit of the area ratio of each of pearlite and residual austenite is 0%.

Pearlite is a structure having cementite in the structure and consumes carbon (C) in steel that contributes to an improvement in strength. Therefore, in a case where the area ratio of pearlite is excessive, strength of the steel sheet decreases. In addition, in a case where the area ratio of residual austenite becomes excessive, the grain size of residual austenite increases. Such residual austenite having a large grain size becomes coarse and hard martensite after deformation. In this case, the origins of cracks are likely to occur, and bendability deteriorates. Therefore, the total of the area ratios of pearlite and residual austenite is set to 0% to 10%. For example, the area ratio of pearlite is set to 5% or less. The area ratio of pearlite is preferably 3% or less, and more preferably 1 % or less. The area ratio of residual austenite is set to, for example, 10% or less. The area ratio of residual austenite is preferably 5% or less.

Next, methods for identification of each microstructure and for area ratio calculation of the 1/4 depth position will be described.

For the identification of each microstructure and the area ratio calculation, first, a region to be residual austenite is determined in a predetermined observation region, and then the identification of ferrite, bainite, martensite, or pearlite is performed in the same region.

The area and the area ratio of residual austenite are measured by the following method.

An observation surface is finished by colloidal silica polishing or electrolytic polishing to perform the measurement thereon using an EBSD device including a thermal field emission type scanning electron microscope (JSM-7001F manufactured by JEOL Ltd.) and an EBSD detector (high-speed Hikari Super detector manufactured by TSL). In this case, the degree of vacuum in the EBSD device is set to $5.0 \times 10^{-6}$ Pa or less, the accelerating voltage is set to 15 kV, the irradiation current level is set to 15, and the electron beam irradiation level (current value) is set to 14.2 nA. Diffraction electrons are measured at intervals of 0.2 $\mu$m (lattice-like arrangement) in each of the sheet thickness direction and the rolling direction in a square region of 100 $\mu$m $\times$ 100 $\mu$m at a position away from the surface of the steel sheet by 1/4 of the sheet thickness. The obtained pseudo-Kikuchi pattern is analyzed to identify a crystal orientation and a crystal system. The sample preparation conditions and the like are set within the ranges of the conditions recommended in "standard for measurement of crystal misorientation for material evaluation using an electron backscatter diffraction (EBSD) method" of the Japan Institute of Metals and Materials. From the obtained crystal orientation information, a region where a crystal structure is fcc is specified using a "Phase Map" function installed in software "OIM Analysis (registered trademark)" attached to an EBSD analyzer, and an area ratio of this region is calculated. Therefore, the area ratio of residual austenite is obtained.

The areas and the area ratios of ferrite, bainite, martensite, and pearlite are measured by the following method.

The same square region as that for the observation of the residual austenite described above is etched with a Nital solution and photographed at a magnification of 5000 times using a field emission scanning electron microscope (FE-SEM). The ratio of each structure obtained by the point counting method at intervals of 2 $\mu$m (lattice-like arrangement) from the obtained structure photograph is defined as an area ratio of each structure.

Each structure is determined as follows.

Ferrite has a granular or needle-like morphology and contains no iron-based carbide inside.

Bainite has a lath-like morphology (lath structure), and is a region in which an iron-based carbide having a major axis of 20 nm or longer is present in the lath structure and the carbide is stretched in the same direction.

Fresh martensite has a lath-like morphology (lath structure), and is a region containing no iron-based carbide having a major axis of 20 nm or longer in the lath structure.

Tempered martensite has a lath-like morphology (lath structure), and is a region in which an iron-based carbide having a major axis of 20 nm or longer is present in the lath structure and the carbide is stretched in different directions.

In addition, regions where ferrite and cementite are lamellar are defined as pearlite.

In the identification of ferrite, bainite, martensite, and pearlite, the above-described visual identification is not performed on the region determined as residual austenite in the preceding identification of residual austenite. However, the area ratio is calculated as a ratio to a total area of the observation range including the residual austenite region.

The determination of the microstructures is generally performed as a normal operation by those skilled in the art and can be easily determined by those skilled in the art.

In a case where the total area ratio of the structures obtained by the above evaluation method is different from 100%, a value obtained by multiplying the area ratio of each structure by 100/(total area ratio of structures) is defined as the area ratio of the structures.

<Microstructure of Surface Layer Part>

In the present embodiment, a region from the surface of the steel sheet to 30 $\mu$m along the sheet thickness direction of the steel sheet is defined as a surface layer part.

In the microstructure of the surface layer part of the steel sheet according to the present embodiment, by area ratio, the total of ferrite and bainite is preferably 2% or more, and the total of one or two or more of martensite, pearlite, and residual austenite is preferably 0% to 98%. In a case where the microstructure of the surface layer part satisfies these requirements and a Vickers hardness ratio (Hs/Hc) to be described later, it is possible to further improve bendability of the steel sheet.

[Total of Area Ratios of Ferrite and Bainite Is 2% or More]

Ferrite and bainite improve ductility of the steel sheet when mixed with a hard phase such as martensite. In order to further improve bendability of the steel sheet, the total of the area ratios of ferrite and bainite in the surface layer part is preferably 2% or more. The total of the area ratios of ferrite and bainite in the surface layer part is more preferably 50% or more.

[Total Area Ratio of One or Two or More of Martensite, Pearlite, and Residual Austenite Is 0% to 98%]

In a case where the total of the area ratios of one or two or more of martensite, pearlite, and residual austenite in the surface layer part is set to 98% or less, bendability of the steel sheet can be further improved. Therefore, the total of the area ratios of one or two or more of martensite, pearlite, and residual austenite in the surface layer part is preferably 98% or less. Since martensite, pearlite, and residual austenite may not be contained in the microstructure of the surface layer part, the lower limits thereof in area ratio are 0%.

Next, methods for identification of each microstructure and for area ratio calculation in the surface layer part will be described.

The identification of each microstructure and the calculation of the area and the area ratio are performed in the same manner as for each microstructure of the 1/4 depth position, except for the measurement position. A square region (a square region of 30 $\mu$m $\times$ 30 $\mu$m with the surface as one side) from the surface of the steel sheet to a depth of 30 $\mu$m is defined as a measurement region.

<Number Density of Carbides Containing B and Having Minor Axis of 0.2 $\mu$m or More of 1/4 Depth Position Is 0.0030 Particles/$\mu$m$^2$ or Less>

In the present embodiment, the number density of the carbide containing B in the surface layer part is limited, but the number density of the carbide containing B of the 1/4 depth position is not particularly limited. At the 1/4 depth position, the number density of the carbide containing B and having a minor axis of 0.2 $\mu$m or more is preferably 0.0030 particles/$\mu$m$^2$ or less. In a case where the number density of the carbide containing B and having a minor axis of 0.2 $\mu$m or more is 0.0030 particles/$\mu$m$^2$ or less, it is possible to suppress the generation of voids starting from the carbide due to the deformation of the steel sheet, and merits can be obtained in terms of the post-pressing collapse properties. Since the carbide may not be contained, the lower limit of the number density of the carbide containing B and having a minor axis of 0.2 $\mu$m or more of the 1/4 depth position in the steel sheet according to the present embodiment is 0 particle/$\mu$m$^2$. The lower limit of the number density of the carbide containing B is, for example, 0.0001 particles/$\mu$m$^2$.

Examples of the carbide containing B include $M_3(C,B)$ and $M_{23}(C,B)_6$. Here, M means Fe and other metal elements.

<Number Density of AlN of 1/4 Depth Position Is 0.01 Particles/$\mu$m$^2$ or More>

At the 1/4 depth position in the steel sheet according to the present embodiment, the number density of AlN is not particularly limited. The number density of AlN of the 1/4 depth position is preferably 0.01 particles/$\mu$m$^2$ or more. In a case where the number density of AlN of the 1/4 depth position is 0.01 particles/$\mu$m$^2$ or more, the formation of BN can be suppressed by fixing at least a part of N as AlN and the hardenability due to a solid solution B can be further improved. The upper limit of the number density of AlN of the 1/4 depth position is not particularly limited, but for example, 1.00 particle/$\mu$m$^2$.

<Number Density of Carbides Containing B and Having Minor Axis of 0.2 $\mu$m or More in Surface Layer Part Is 0.0030 Particles/$\mu$m$^2$ or Less>

In the surface layer part of the steel sheet according to the present embodiment, the number density of the carbide containing B and having a minor axis of 0.2 $\mu$m or more is set to 0.0030 particles/$\mu$m$^2$ or less. In a case where the number density of the carbide is 0.0030 particles/$\mu$m$^2$ or less, the generation of voids during pressing can be suppressed, and the post-pressing collapse properties can be improved. The number density of the carbide containing B and having a minor axis of 0.2 $\mu$m or more in the surface layer part is more preferably 0.0020 particles/$\mu$m$^2$ or less. The number density of the carbide containing B and having a minor axis of 0.2 $\mu$m or more in the surface layer part is still more preferably 0.0010 particles/$\mu$m$^2$ or less.

Since the carbide may not be contained, the lower limit of the number density of the carbide containing B and having a minor axis of 0.2 $\mu$m or more is 0 particle/$\mu$m$^2$. The lower limit of the number density of the carbide containing B is, for example, 0.0001 particles/$\mu$m$^2$.

The morphology of the carbide in the surface layer part is a more important index since it has a particularly significant influence on the deformation limit in the steel sheet having a softened surface layer. The reason for this is not clear, but it is considered that this is because, in the softened primary phase, fine peeling (fine voids) occurring at the interface between the carbide and the primary phase easily progresses in the primary phase and grows into fatal cracks that lead to fracture.

<Number Density of Carbides Containing B and Having Minor Axis of 0.05 to 0.2 $\mu$m in Surface Layer Part Is 0.0010 Particles/$\mu$m$^2$ or Less>

In the surface layer part of the steel sheet according to the present embodiment, the number density of the carbide containing B and having a minor axis of 0.05 to 0.2 $\mu$m may be 0.0010 particles/$\mu$m$^2$ or less. By controlling the state of the carbide of B as above, it is possible to suppress the occurrence of fine voids even under such severe pressing conditions that sites having a small radius of curvature are generated in a component.

<Number Density of AlN in Surface Layer Part Is 0.01 Particles/$\mu$m$^2$ or More>

In the surface layer part of the steel sheet according to the present embodiment, the number density of AlN is preferably 0.01 particles/$\mu$m$^2$ or more. In a case where the number density of AlN is 0.01 particles/$\mu$m$^2$ or more, the hardenability due to a solid solution B can be further improved. The number density of AlN is more preferably 0.10 particles/$\mu$m$^2$ or more. The number density of AlN is still more preferably 0.15 particles/$\mu$m$^2$ or more. The upper limit of the number density of AlN is not particularly limited, but for example, 2.00 particles/$\mu$m$^2$.

In addition, the number density of AlN in the surface layer part is a more important index since it has a particularly significant influence on the deformation limit in the steel sheet having a softened surface layer. The reason for this is not clear, but it is considered that this is because, in the softened primary phase, fine peeling (fine voids) occurring at the interface between AlN and the primary phase easily progresses in the primary phase and grows into fatal cracks that lead to fracture. In the steel sheet according to the present embodiment, AlN is sufficiently finer in size and sufficiently higher in number density than the above-described carbide containing B, and the sites where voids are generated due to deformation are sufficiently dispersed in the primary phase. Therefore, it may be strange that the fracture limit is influenced as in the case of carbide containing B, but since the shape of AlN is generally anisotropic and needle-like, the occurrence and progress of cracks are strongly influenced.

The minor axis of the carbide containing B, the number density of the carbide containing B, and the number density of AlN can be measured by the following method. For the measurement, a sample of a thin film or an extraction replica is used and observed at a magnification of 5000 to 50000 times with a scanning or transmission electron microscope. At least 30 visual fields are measured, and the surface layer part is measured by collecting a sample of a thin film or an extraction replica from a Z-surface (a surface perpendicular to the rolling direction and the sheet width direction) in a region from the surface of the steel sheet to 30 $\mu$m. For the measurement at the 1/4 depth position, a region of 3/8t to 5/8t (t is the sheet thickness of the steel sheet) from the surface of the steel sheet is exposed by polishing, and a sample of a thin film or an extraction replica is collected from a Z-surface (a surface perpendicular to the rolling direction and the sheet width direction) and measured. For the identification of precipitates, elements of the precipitates are analyzed with an energy dispersive X-ray spectrometry (EDS) device mounted on the scanning or transmission electron microscope. A material in which Al and N are detected is referred to as AlN. Regarding the precipitates in which no Al is detected, a B carbide and BN are identified from an electron beam diffraction image.

<Ratio of Vickers Hardness Hs of Surface Layer Part to Vickers Hardness Hc of 1/4 Depth Position>

Hs/He that is a ratio of Vickers hardness Hs of the surface layer part of the steel sheet according to the present embodiment to Vickers hardness Hc of the 1/4 depth position is preferably 0.65 or less. In a case where the microstructure of the surface layer part is within the above-described range and Hs/Hc is 0.65 or less, bendability can be further improved.

Bendability improvement effect due to surface layer softening is generally known, and in the steel sheet according to the present embodiment in which the morphology of the precipitates in the steel, particularly the morphology of the carbide containing B and AlN in the surface layer part is controlled, bendability improvement effect is significantly exhibited. The reason for this is not clear, but it is considered that this is because the effect is associated with the precipitate morphology in the surface layer part as described above.

The Vickers hardness Hs of the surface layer part and the Vickers hardness Hc of the 1/4 depth position are measured by the following procedure.

A sheet thickness cross section that is parallel to the rolling direction and the sheet thickness direction of the steel sheet is mirror-finished by mechanical polishing. In the polished surface, Vickers hardness (HV) is measured with a pressing load of 20 gf at 12 sites on a straight line parallel to the rolling direction at a distance (depth) of 20 $\mu$m from the sheet surface toward the inside of the sheet thickness according to JIS Z 2244-1: 2020. An average of the Vickers hardness values at the 10 points excluding the lowest value and the highest value from the Vickers hardness values measured at 12 points is defined as the Vickers hardness Hs of the surface layer part.

Similarly, in the polished surface, Vickers hardness (HV) is measured with a pressing load of 20 gf at 12 sites on a straight line parallel to the rolling direction at a distance (depth) of 1/4 of the sheet thickness from the sheet surface toward the inside of the sheet thickness. An average of the Vickers hardness values at the 10 points excluding the lowest value and the highest value from the Vickers hardness values measured at 12 points is defined as the Vickers hardness Hc of the 1/4 depth position.

The interval between the measurement points is preferably set to a distance of 4 times or longer the length of an indentation. The distance of 4 times or longer the length of an indentation, which has been mentioned here, is a distance obtained by multiplying a numerical value of 4 times or more by the length of a diagonal line of an indentation formed by a diamond indenter during the measurement of the Vickers hardness.

<Mechanical Properties>

[Tensile Strength Is 980 MPa or More]

In the steel sheet according to the present embodiment, a tensile strength (TS) as a strength that contributes to a reduction in weight of a vehicle body of a vehicle is preferably set to 980 MPa or more. From the viewpoint of impact absorption properties, strength of the steel sheet is preferably 1400 MPa or more, and more preferably 1470 MPa or more.

The tensile strength (TS) can be obtained by performing a tensile test according to JIS Z 2241: 2011 with a JIS No. 5 tensile test piece collected from the steel sheet in a direction perpendicular to the rolling direction and the sheet thickness direction.

<Sheet Thickness>

The sheet thickness of the steel sheet according to the present embodiment is not limited, but is preferably 0.5 mm or more in consideration of an application to an impact absorbing member. The sheet thickness is more preferably 1.0 mm or more. The sheet thickness of the steel sheet may be, for example, 3.0 mm or less. The sheet thickness is more preferably 2.0 mm or less.

The steel sheet according to the present embodiment may have a hot-dip galvanized layer on the surface thereof. Corrosion resistance is improved by providing a plating layer on the surface. In a case where there is a concern about holes due to corrosion in a steel sheet for a vehicle, the steel sheet cannot be thinned to a certain sheet thickness or less in some cases even in a case where the high-strengthening is achieved. One purpose of the high-strengthening of the steel sheet is to reduce the weight by making the steel sheet thinner. Accordingly, even in a case where a steel sheet is developed, the part where the steel sheet is to be applied is limited in a case where the steel sheet has low corrosion resistance. As a method for solving the problems, it is considered that the steel sheet is subjected to plating such as hot-dip galvanizing with high corrosion resistance. In the steel sheet according to the present embodiment, the steel sheet components are controlled as described above, and hot-dip galvanizing is thus possible.

The hot-dip galvanized layer may also be a hot-dip galvannealed layer.

Since the steel sheet according to the present embodiment has excellent post-pressing collapse properties, it can be suitably applied to vehicle components, particularly frontside members. Even in a case where the steel sheet according to the present embodiment is processed into such a component, the above-described properties of the steel sheet according to the present embodiment are inherited in a part that has not been strongly processed. Therefore, in a case the measurement is performed on a processed component, the measurement is performed on a part, avoiding a part (with a radius of curvature of 1000 mm or less, for example) that has been strongly processed.

<Manufacturing Method>

The steel sheet according to the present embodiment can be manufactured by a manufacturing method including the following steps (I) to (IV). Each temperature to be described below is a surface temperature of a slab or a steel sheet.

(I) A hot rolling step of heating a slab having the same chemical composition as the steel sheet described above and performing hot rolling under the condition in which a total time in a temperature range of 950°C to 700°C is 5 s or longer to obtain a hot-rolled steel sheet.

(II) A coiling step of coiling the hot-rolled steel sheet at a coiling temperature of 600°C to 450°C after the hot rolling step.

(III) A cold rolling step of performing cold rolling on the hot-rolled steel sheet with a sheet thickness reduction of 20% to 80% after the coiling step to obtain a cold-rolled steel sheet.

(IV) An annealing step of annealing the cold-rolled steel sheet by raising a temperature to an annealing temperature of 740°C to 900°C in an atmosphere having a dew point of -40°C to 20°C after the cold rolling step so that an average rising rate in a temperature range of 550°C to 650°C is 0.5 to 5.0 °C/s.

Hereinafter, each step will be described.

[Hot Rolling Step]

In the hot rolling step, a slab having the same chemical composition as the steel sheet according to the present embodiment described above is heated and hot-rolled to obtain a hot-rolled steel sheet. Slab heating conditions in the hot rolling are not limited, but the slab is preferably heated to 1100°C or higher. In a case where the heating temperature is lower than 1100°C, the material is likely to be insufficiently homogenized.

In the hot rolling step, after the slab is heated, it is hot-rolled under the condition in which the total time during which the surface temperature reaches a temperature range of 950°C to 700°C is 5 s or longer. The precipitation of BN can be promoted by making the chemical composition satisfy Expression (1) and setting the total time in the surface temperature of 950°C to 700°C to 5 s or longer.

The manufacturing method of the slab is not limited. The slab is preferably cast by a continuous casting method from the viewpoint of productivity, but may also be manufactured by an ingot-making method or a thin slab casting method.

In a case where a steel piece obtained by continuous casting can be subjected to the hot rolling step while it maintains a sufficiently high temperature, the heating of the slab may be omitted.

[Coiling Step]

In the coiling step, the steel sheet (hot-rolled steel sheet) after the hot rolling step is coiled at a coiling temperature of 600°C to 450°C. After hot rolling ends, cooling conditions to the coiling temperature are not particularly limited.

By coiling in a state in which the surface temperature of the steel sheet is 600°C or lower, the decomposition of BN and the generation of a coarse B carbide can be suppressed. In a case where the steel sheet is coiled in a state in which the surface temperature of the steel sheet is lower than 400°C, workability deteriorates due to the temperature decrease, and fracture may occur in the subsequent cold rolling step.

It is more preferable that the average cooling rate of the surface of a center part in width of the hot-rolled coil during a time period of 1 to 3 hours after coiling (from 1 hour after completion of the coiling to 3 hours after completion of the coiling) is set to 50 °C/h or faster. Therefore, the decomposition of BN and the generation of a coarse B carbide are suppressed. Even in a case where a B carbide is generated, the size of the B carbide can be refined. As a result, it is possible to further reduce the number density of the carbide containing B and having a minor axis of 0.05 to 0.2 $\mu$m in the surface layer part.

The center part in width of the hot-rolled coil refers to a center part in the width direction of the outer circumferential surface of the hot-rolled coil.

[Cold Rolling Step]

In the cold rolling step, the steel sheet (hot-rolled steel sheet) after the coiling step is descaled as necessary by pickling or the like using a known method, and then cold-rolled with a sheet thickness reduction of 20% to 80% to obtain a cold-rolled steel sheet.

By performing cold rolling under the condition of a sheet thickness reduction of 20% to 80%, the recrystallization in the annealing step can be allowed to proceed sufficiently and the precipitation of AlN during annealing is promoted, so that it is possible to obtain a steel sheet having excellent post-pressing collapse properties.

The cold-rolled steel sheet after the cold rolling step may be subjected to a treatment such as degreasing according to a known method as necessary.

[Annealing Step]

In the annealing step, the steel sheet (cold-rolled steel sheet) after the cold rolling step is annealed by raising the temperature to an annealing temperature of 740°C to 900°C in an atmosphere having a dew point of -40°C to 20°C so that an average rising rate in a temperature range of 550°C to 650°C is 0.5 to 5.0 °C/s. These conditions are suitable for obtaining appropriate microstructural fractions. In a case where the chemical composition of the slab satisfies Expression (2) and the temperature is raised to the annealing temperature at an average rising rate in a temperature range of 550°C to 650°C set to 0.5 to 5.0 °C/s, it is possible to promote the decomposition of BN and the formation of AlN. Therefore, Expression (5) can be satisfied.

In a case where the annealing temperature in the annealing step is set in the $\alpha/\gamma$ two-phase region, a desired amount of ferrite can be obtained. In a case where the area ratio of ferrite is set to 0%, the annealing temperature may be set in the $\gamma$ single-phase region. The cooling step after holding at the annealing temperature is not limited, but may be a rapid cooling step of obtaining martensite, a holding step at 550°C or lower for obtaining bainite and residual austenite, or a combination thereof. For example, after holding at the annealing temperature, in a case where cooling is performed to a temperature range of 50°C to 250°C at an average cooling rate of 10 °C/s or faster, untransformed austenite is transformed into martensite.

Here, in the description, the annealing step is assumed to be continuous annealing, but as long as BN can be decomposed through the heat treatment, the manufacturing method of the steel sheet according to the present embodiment is not limited to using an annealing facility. In order to realize a preferable rising rate and a preferable cooling rate, continuous annealing is advantageous, but as long as other conditions are satisfied, the present invention does not exclude the application of batch annealing or the like.

In particular, in a case where the dew point during annealing is limited to -15°C to 20°C and slow cooling (average cooling rate of slower than 3 °C/s) is performed at 650°C or higher after holding at the annealing temperature, it is possible to promote the generation of ferrite and bainite in the surface layer part. Therefore, Hs/Hc that is a ratio of Vickers hardness Hs of the surface layer part to Vickers hardness He of the 1/4 depth position can be set to 0.65 or less. In addition, in the microstructure of the surface layer part, by area ratio, the total of ferrite and bainite can be set to 2% or more, and the total of one or two or more of martensite, pearlite, and residual austenite can be set to 0% to 98%.

The holding time at the annealing temperature is preferably 60 seconds or longer. In a case where the holding time at the annealing temperature is set to 60 seconds or longer, Hs/Hc that is a ratio of Vickers hardness Hs of the surface layer part to Vickers hardness Hc of the 1/4 depth position is easily set to 0.65 or less. In addition, in a case where the holding time at the annealing temperature is set to 60 seconds or longer, decarburization can be sufficiently promoted, and the total of the area ratios of ferrite and bainite in the surface layer part can be set to 50% or more.

[Hot-Dip Galvanizing]

[Alloying]

In the manufacturing of a steel sheet (hot-dip galvanized steel sheet) having a hot-dip galvanized layer on a surface thereof, in the course of cooling in the annealing step, in a state in which the temperature of the steel sheet is higher than 425°C and lower than 600°C, the steel sheet may be subjected to hot-dip galvanizing by being immersed in a plating bath at the same temperature. In addition, in the manufacturing of a steel sheet (hot-dip galvannealed steel sheet) having a hot-dip galvannealed plating on a surface thereof, an alloying heat treatment of heating the steel sheet at higher than 450°C and lower than 600°C may be further performed subsequent to the hot-dip galvanizing step to form a hot-dip galvannealed plating.

[Tempering Step]

After the annealing step, hot-dip galvanizing, or alloying, a tempering step may be performed. In the tempering step, the steel sheet is tempered for 1 second or longer at a temperature of 200°C to 350°C to adjust the steel sheet strength, bendability, hydrogen embrittlement resistance, and the like.

In a case where the hot-dip galvanizing step and/or the alloying step is performed, the steel sheet after the hot-dip galvanizing step or the steel sheet after the hot-dip galvanizing step and the alloying step is preferably cooled to a temperature range of 50°C to 250°C, and then tempered for 1 second or longer at a temperature range of 200°C to 350°C. In a case where the tempering temperature is higher than 350°C, the steel sheet strength decreases. The tempering temperature is preferably 325°C or lower, and more preferably 300°C or lower.

On the other hand, in a case where the tempering temperature is lower than 200°C, the tempering becomes insufficient, and bendability and hydrogen embrittlement resistance deteriorate. Accordingly, the tempering temperature is set to 200°C or higher. The tempering temperature is preferably 220°C or higher, and more preferably 250°C or higher.

The tempering time may be 1 second or longer, but is preferably 5 seconds or longer, and more preferably 10 seconds or longer in order to perform a stable tempering treatment. On the other hand, since long tempering decreases the steel sheet strength, the tempering time is preferably 750 seconds or shorter, and more preferably 500 seconds or shorter.

[Skin Pass Step]

The steel sheet after the tempering step may be cooled to a temperature at which skin pass rolling can be performed, and then subjected to skin pass rolling. In a case where the cooling after annealing is water spray cooling, dip cooling, air-water cooling, or the like in which water is used, it is preferable to perform pickling and, subsequently, plating with a small amount of one or two or more of Ni, Fe, Co, Sn, and Cu before skin pass rolling in order to remove an oxide film formed by contact with water at a high temperature and improve chemical convertibility of the steel sheet. Here, the small amount refers to a plating amount of about 3 to 30 mg/m$^2$ on the steel sheet surface.

The shape of the steel sheet can be adjusted by the skin pass rolling. The elongation ratio of the skin pass rolling is preferably 0.05% or more. The elongation ratio of the skin pass rolling is more preferably 0.10% or more. On the other hand, in a case where the elongation ratio of the skin pass rolling is high, the area ratio of residual austenite decreases, and ductility deteriorates. Therefore, the elongation ratio is preferably set to 1.00% or less. The elongation ratio is more preferably 0.75% or less, and still more preferably 0.50% or less.

Examples

The present invention will be described in greater detail with reference to examples. However, conditions of the examples are merely an example adopted to confirm the operability and the effects of the present disclosure, and the present disclosure is not limited to these condition examples. The present disclosure may adopt various conditions as long as the object of the present disclosure is achieved without departing from the gist of the present disclosure.

Slabs having chemical compositions shown in Tables 1A and 1B were cast. The slabs after casting were subjected to hot rolling, coiling, cold rolling, and annealing under the conditions shown in Tables 2A and 2B. In the annealing step, the holding time at an annealing temperature was set to 60 seconds or longer, and after holding, slow cooling (average cooling rate of slower than 3 °C/s) was performed in a temperature range of 650°C or higher.

[Table 1A]

Chemical Composition (mass%), Remainder: Fe and Impurities

| Component | C | Si | Mn | B | Al | P | S | N | O | Cr | Mo | W | Co | Nb | Ti | V | Ta |
|---|---|---|---|---|---|---|---|---|---|---|---|---|---|---|---|---|---|
| a | 0.12 | 0.48 | 2.6 | 0.0012 | 0.100 | 0.010 | 0.0015 | 0.0043 | 0.0009 | | 0.065 | | | 0.03 | 0.0060 | | |
| b | 0.08 | 0.80 | 2.1 | 0.0010 | 0.120 | 0.014 | 0.0026 | 0.0038 | 0.0017 | 0.150 | | | | 0.01 | | | 0.018 |
| c | 0.23 | 0.03 | 3.1 | 0.0015 | 0.060 | 0.016 | 0.0017 | 0.0047 | 0.0011 | | | | | | 0.0040 | | |
| d | 0.13 | 0.50 | 2.2 | 0.0012 | 0.050 | 0.017 | 0.0027 | 0.0025 | 0.0017 | | 0.045 | | | | | 0.120 | |
| e | 0.24 | 1.00 | 2.3 | 0.0011 | 0.500 | 0.007 | 0.0014 | 0.0053 | 0.0019 | | | | | | 0.0110 | | |
| f | 0.09 | 0.75 | 1.7 | 0.0008 | 0.120 | 0.012 | 0.0020 | 0.0025 | 0.0016 | | 0.100 | | | 0.03 | 0.0050 | | |
| g | 0.11 | 0.19 | 3.3 | 0.0012 | 0.300 | 0.016 | 0.0020 | 0.0035 | 0.0019 | | | 0.800 | | | | | |
| h | 0.12 | 1.35 | 2.6 | 0.0009 | 0.080 | 0.015 | 0.0012 | 0.0038 | 0.0017 | | | | | 0.02 | 0.0060 | | |
| i | 0.19 | 1.80 | 2.7 | 0.0024 | 0.060 | 0.017 | 0.0020 | 0.0042 | 0.0011 | | | | 0.400 | 0.03 | | | |
| j | 0.07 | 1.90 | 2.6 | 0.0015 | 0.070 | 0.008 | 0.0020 | 0.0046 | 0.0014 | | | | | 0.45 | 0.0080 | | |
| k | 0.23 | 0.12 | 2.2 | 0.0047 | 0.170 | 0.013 | 0.0300 | 0.0061 | 0.0016 | 1.400 | | | | | | | |
| l | 0.22 | 0.31 | 1.7 | 0.0008 | 0.100 | 0.011 | 0.0019 | 0.0095 | 0.0051 | | 0.700 | | | | 0.0300 | | |
| m | 0.09 | 0.50 | 2.6 | 0.0020 | 0.090 | 0.012 | 0.0024 | 0.0042 | 0.0014 | | 0.130 | | | 0.01 | | | |
| n | 0.08 | 0.42 | 2.5 | 0.0020 | 0.080 | 0.012 | 0.0030 | 0.0047 | 0.0013 | 0.400 | 0.080 | | | 0.02 | | | |
| o | 0.05 | 0.60 | 2.5 | 0.0009 | 0.080 | 0.014 | 0.0030 | 0.0033 | 0.0019 | | | | | | | | |
| p | 0.30 | 0.80 | 1.8 | 0.0015 | 0.100 | 0.012 | 0.0020 | 0.0060 | 0.0018 | | | | | | | | |
| q | 0.12 | 2.60 | 2.4 | 0.0011 | 0.150 | 0.008 | 0.0300 | 0.0036 | 0.0019 | | | | | | | | |
| r | 0.16 | 0.60 | 0.9 | 0.0012 | 0.080 | 0.012 | 0.0019 | 0.0045 | 0.0011 | | | | | | | | |
| s | 0.18 | 0.60 | 3.6 | 0.0043 | 0.090 | 0.008 | 0.0014 | 0.0060 | 0.0019 | | | | | | | | |
| u | 0.08 | 0.80 | 2.4 | 0.0000 | 0.090 | 0.014 | 0.0100 | 0.0054 | 0.0014 | | | | | | | | |
| v | 0.13 | 1.50 | 2.4 | 0.0016 | 2.300 | 0.013 | 0.0014 | 0.0034 | 0.0011 | | | | | | | | |
| w | 0.23 | 0.40 | 2.3 | 0.0010 | 0.080 | 0.110 | 0.0050 | 0.0014 | 0.0015 | | | | | | | | |
| x | 0.17 | 1.50 | 2.5 | 0.0008 | 0.070 | 0.004 | 0.0800 | 0.0032 | 0.0010 | | | | | | | | |
| y | 0.18 | 0.60 | 2.8 | 0.0016 | 0.090 | 0.012 | 0.0030 | 0.0400 | 0.0010 | | | | | | | | |
| z | 0.25 | 0.60 | 2.5 | 0.0025 | 0.060 | 0.016 | 0.0010 | 0.0014 | 0.0200 | | | | | | | | |

(continued)

| Component | Chemical Composition (mass%), Remainder: Fe and Impurities | | | | | | | | | | | | | | | | |
|---|---|---|---|---|---|---|---|---|---|---|---|---|---|---|---|---|---|
| | C | Si | Mn | B | Al | P | S | N | O | Cr | Mo | W | Co | Nb | Ti | V | Ta |
| aa | 0.08 | 0.80 | 1.8 | 0.0025 | 0.090 | 0.016 | 0.0020 | 0.0014 | 0.0011 | | | | | | 0.0200 | | |
| ab | 0.15 | 1.50 | 2.8 | 0.0021 | 0.005 | 0.012 | 0.0014 | 0.0060 | 0.0014 | | | | | | | | |
| ac | 0.12 | 0.25 | 2.2 | 0.0015 | 0.150 | 0.016 | 0.0020 | 0.0020 | 0.0012 | | | | | | | | |
| The underline indicates that the underlined item falls outside the scope of the present invention. | | | | | | | | | | | | | | | | | |

[Table 1B]

| Component | Chemrical Composition (mass%), Remainder: Fe and Impurities | | | | | | | | | Expression (1) [Ex. N] | Expression (2) [Ex. N] - 14/27 × [A1] | Expression (3) [B] -10.8/14 × [ex. N] | Expression (4) [A1] - 0.01 × [ex. N$^{-0.849}$] | Remarks |
|---|---|---|---|---|---|---|---|---|---|---|---|---|---|---|
| | Sn | Sb | As | Ni | Cu | Ca | Zr | Mg | REM | | | | | |
| a | | | | | | | | | | 0.0025 | -0.049 | -0.0007 | -1.505 | Invention Steel |
| b | | | | | | | | 0.011 | | 0.0038 | -0.058 | -0.0019 | -1.014 | |
| c | | | | | | | | | | 0.0035 | -0.028 | -0.0012 | -1.147 | |
| d | | 0.001 | | | | | | | | 0.0025 | -0.023 | -0.0007 | -1.569 | |
| e | | | | | | | | | | 0.0021 | -0.257 | -0.0005 | -1.404 | |
| f | | | | | | | | | 0.059 | 0.0011 | -0.061 | 0.0000 | -3.198 | |
| g | | | | 0.450 | 0.350 | | | | | 0.0035 | -0.152 | -0.0015 | -0.916 | |
| h | | | | | | | | | | 0.0020 | -0.039 | -0.0007 | -1.847 | |
| i | 0.010 | | | | | 0.030 | 0.0005 | | | 0.0042 | -0.027 | -0.0008 | -0.982 | |
| j | | | 0.020 | 0.020 | | | | | | 0.0022 | -0.034 | -0.0002 | -1.709 | |
| k | | | | | | | | | | 0.0061 | -0.082 | 0.0000 | -0.589 | |
| l | | | | | | | | | | 0.0007 | -0.051 | 0.0003 | -4.810 | |
| m | | | | | | | | | | 0.0042 | -0.042 | -0.0012 | -0.958 | |
| n | | | | | | | | | | 0.0047 | -0.037 | -0.0016 | -0.867 | |
| o | | | | | | | | | | 0.0033 | -0.038 | -0.0016 | -1.199 | |
| p | | | | | | | | | | 0.0060 | -0.046 | -0.0031 | -0.670 | |
| q | | | | | | | | | | 0.0036 | -0.074 | -0.0017 | -1.038 | |
| r | | | | | | | | | | 0.0045 | -0.037 | -0.0023 | -0.903 | |
| s | | | | | | | | | | 0.0060 | -0.041 | -0.0003 | -0.680 | |
| u | | | | | | | | | | 0.0054 | -0.041 | -0.0042 | -0.752 | |
| v | | | | | | | | | | 0.0034 | -1.189 | -0.0010 | <u>1.053</u> | Comparative Steel |
| w | | | | | | | | | | 0.0014 | -0.040 | -0.0001 | -2.568 | |
| x | | | | | | | | | | 0.0032 | -0.033 | -0.0017 | -1.243 | |

| Component | Cherrical Composition (mass%), Remainder: Fe and Impurities | | | | | | | | | Expression (1) [Ex. N] | Expression (2) [Ex. N] - 14/27 × [A1] | Expression (3) [B] -10.8/14 × [ex. N] | Expression (4) [A1] - 0.01 × [ex. N$^{-0.849}$] | Remarks |
|---|---|---|---|---|---|---|---|---|---|---|---|---|---|---|
| | Sn | Sb | As | Ni | Cu | Ca | Zr | Mg | REM | | | | | |
| y | | | | | | | | | | 0.0400 | -0.007 | -0.0293 | -0.064 | |
| z | | | | | | | | | | 0.0014 | -0.030 | <u>0.0014</u> | -2.588 | |
| aa | | | | | | | | | | <u>-0.0045</u> | -0.051 | <u>0.0060</u> | - | |
| ab | | | | | | | | | | 0.0060 | <u>0.003</u> | -0.0025 | -0.765 | |
| ac | | | | | | | | | | 0.0020 | -0.076 | 0.0000 | -1.806 | Invention Steel |
| The underline indicates that the under lined item falls outside the scope of the present invention. | | | | | | | | | | | | | | |

[Table 2]

| Component | Test No. | Hot Rolling Step: Total Time in Temperature Range of 950°C to 750°C (s) | Coiling Step: Coiling Temperature (°C) | Average Cooling Rate of Coil (°C/h) | Cold Rolling Step: Sheet Thickness Reduction (%) | Dew Point (°C) | Annealing Temperature (°C) | Average Rising Rate at 550°C to 650°C (°C/s) | Presence or Absence of Plating | Presence or Absence of Alloying | Remarks |
|---|---|---|---|---|---|---|---|---|---|---|---|
| a | 1 | 28 | 575 | 63 | 67 | -12 | 795 | 1.2 | Presence | Presence | Invention Example |
| b | 2 | 17 | 564 | 58 | 65 | -5 | 831 | 4.2 | Presence | Absence | |
| c | 3 | 8 | 497 | 67 | 56 | -8 | 757 | 1.5 | Presence | Absence | |
| d | 4 | 6 | 460 | 56 | 62 | -33 | 805 | 1.9 | Presence | Presence | |
| e | 5 | 12 | 544 | 70 | 68 | -10 | 794 | 1.6 | Presence | Absence | |
| f | 6 | 9 | 517 | 70 | 52 | -10 | 853 | 3.3 | Absence | Absence | |
| g | 7 | 17 | 517 | 55 | 58 | -3 | 796 | 3.1 | Presence | Absence | |
| h | 8 | 18 | 583 | 59 | 65 | -1 | 813 | 2.6 | Presence | Presence | |
| i | 9 | 5 | 505 | 53 | 68 | 1 | 838 | 4.0 | Presence | Absence | |
| j | 10 | 6 | 475 | 57 | 58 | -15 | 803 | 1.1 | Presence | Presence | |
| k | 11 | 11 | 558 | 59 | 48 | -35 | 780 | 2.1 | Presence | Absence | |
| l | 12 | 8 | 455 | 70 | 52 | 0 | 816 | 1.7 | Presence | Presence | |
| m | 13 | 10 | 490 | 55 | 51 | -20 | 769 | 2.0 | Presence | Presence | |
| n | 14 | 13 | 472 | 59 | 78 | -35 | 779 | 0.5 | Presence | Absence | |
| a | 15 | 7 | 561 | 52 | 28 | 2 | 802 | 3.7 | Absence | Absence | |
| c | 16 | 18 | 470 | 61 | 65 | 10 | 757 | 0.5 | Presence | Presence | |
| e | 17 | 12 | 507 | 56 | 62 | 0 | 807 | 2.6 | Presence | Absence | |
| h | 18 | 15 | 511 | 64 | 59 | -5 | 817 | 0.5 | Presence | Absence | |
| m | 19 | 17 | 498 | 67 | 59 | 6 | 765 | 0.7 | Presence | Presence | |
| n | 20 | 15 | 469 | 70 | 68 | -13 | 760 | 3.1 | Presence | Absence | |
| ac | 21 | 6 | 480 | 80 | 54 | -6 | 800 | 3.7 | Absence | Absence | |
| m | 22 | 10 | 480 | 40 | 65 | 6 | 785 | 0.8 | Presence | Presence | |
| o | 23 | 13 | 499 | 59 | 65 | -16 | 740 | 1.1 | Absence | Absence | Comparative Example |
| p | 24 | 27 | 490 | 52 | 55 | -25 | 810 | 2.1 | Presence | Presence | |
| q | 25 | 6 | 552 | 54 | Fractured in Cold Rolling Step | | | | | | |
| r | 26 | 7 | 505 | 57 | 59 | -16 | 740 | 4.5 | Absence | Absence | |
| s | 27 | 15 | 552 | 60 | 65 | -32 | 768 | 0.8 | Absence | Absence | |
| u | 28 | 6 | 461 | 59 | 55 | -19 | 748 | 3.1 | Presence | Presence | |
| v | 29 | 30 | 517 | 55 | 62 | -24 | 890 | 3.4 | Presence | Absence | |
| w | 30 | 12 | 506 | 52 | 59 | -16 | 749 | 0.9 | Presence | Presence | |
| x | 31 | 19 | 517 | 54 | 54 | -20 | 811 | 3.6 | Presence | Presence | |
| y | 32 | 18 | 539 | 61 | 49 | -20 | 788 | 2.7 | Presence | Absence | |
| z | 33 | 30 | 488 | 64 | 49 | -10 | 769 | 4.4 | Presence | Absence | |
| aa | 34 | 7 | 473 | 61 | 48 | -20 | 802 | 0.7 | Absence | Absence | |
| ab | 35 | 5 | 522 | 64 | 56 | -12 | 750 | 3.6 | Presence | Presence | |
| e | 36 | 1 | 562 | 53 | 54 | -15 | 839 | 1.3 | Presence | Presence | |
| e | 37 | 28 | 380 | 58 | Fractured in Cold Rolling Step | | | | | | |
| f | 38 | 16 | 680 | 61 | 50 | -16 | 840 | 3.2 | Presence | Presence | |
| f | 39 | 23 | 542 | 64 | 9 | -18 | 825 | 4.1 | Presence | Absence | |
| g | 40 | 6 | 525 | 57 | 60 | -17 | 698 | 2.3 | Presence | Presence | |
| g | 41 | 13 | 460 | 70 | 80 | -36 | 787 | 7.2 | Presence | Absence | |

The underline indicates that the underlined item falls outside the scope of the present invention.

[Table 3A]

| Test No. | Component | Microstructure of 1/4 Depth Position | | | Microstructure of Surface Layer Part | | 1/4 Depth Position | | Surface Layer Part | | |
|---|---|---|---|---|---|---|---|---|---|---|---|
| | | Ferrite and Bainite (%) | Martensite (%) | Pearlite and Residual γ (%) | Ferrite and Bainite (%) | Martensite, Pearlite, and Residual γ (%) | Number Density of Carbides Containing B (particles/μm²) | Number Density of AlN (particles/μm²) | Number Density of Carbides Containing B and Having Minor Axis of 0.2 μm or More (particles/μm²) | Number Density of Carbides Containing B and Having Minor Axis of 0.05 to 0.2 μm (particles/μm²) | Number Density of AlN (particles/μm²) |
| 1 | a | 17 | 83 | 0 | 65 | 35 | 0.0000 | 0.23 | 0.0000 | 0.0000 | 0.38 |
| 2 | b | 21 | 79 | 0 | 72 | 28 | 0.0002 | 0.44 | 0.0002 | 0.0005 | 0.63 |
| 3 | c | 0 | 98 | 2 | 45 | 55 | 0.0006 | 0.48 | 0.0007 | 0.0007 | 0.61 |
| 4 | d | 12 | 88 | 0 | 37 | 63 | 0.0000 | 0.20 | 0.0000 | 0.0000 | 0.34 |
| 5 | e | 22 | 70 | 8 | 72 | 28 | 0.0014 | 0.22 | 0.0018 | 0.0005 | 0.27 |
| 6 | f | 16 | 84 | 0 | 74 | 26 | 0.0000 | 0.09 | 0.0000 | 0.0000 | 0.13 |
| 7 | g | 11 | 89 | 0 | 73 | 27 | 0.0000 | 0.31 | 0.0000 | 0.0000 | 0.51 |
| 8 | h | 28 | 71 | 1 | 83 | 17 | 0.0001 | 0.16 | 0.0001 | 0.0006 | 0.26 |
| 9 | i | 14 | 79 | 7 | 69 | 31 | 0.0000 | 0.41 | 0.0000 | 0.0000 | 0.69 |
| 10 | j | 56 | 44 | 0 | 98 | 2 | 0.0008 | 0.29 | 0.0010 | 0.0006 | 0.32 |
| 11 | k | 0 | 99 | 1 | 2 | 98 | 0.0001 | 0.82 | 0.0001 | 0.0003 | 0.91 |
| 12 | l | 2 | 98 | 0 | 51 | 49 | 0.0000 | 0.03 | 0.0000 | 0.0000 | 0.05 |
| 13 | m | 48 | 52 | 0 | 71 | 29 | 0.0000 | 0.35 | 0.0000 | 0.0000 | 0.58 |
| 14 | n | 38 | 60 | 2 | 38 | 62 | 0.0000 | 0.53 | 0.0000 | 0.0000 | 0.76 |
| 15 | a | 10 | 90 | 0 | 68 | 32 | 0.0000 | 0.29 | 0.0000 | 0.0000 | 0.36 |
| 16 | c | 2 | 98 | 0 | 56 | 44 | 0.0004 | 0.43 | 0.0006 | 0.0004 | 0.54 |
| 17 | e | 15 | 77 | 8 | 67 | 33 | 0.0003 | 0.19 | 0.0005 | 0.0008 | 0.32 |
| 18 | h | 26 | 74 | 0 | 98 | 2 | 0.0001 | 0.18 | 0.0001 | 0.0009 | 0.30 |
| 19 | m | 50 | 50 | 0 | 73 | 27 | 0.0000 | 0.53 | 0.0000 | 0.0000 | 0.59 |
| 20 | n | 46 | 54 | 0 | 70 | 30 | 0.0003 | 0.44 | 0.0003 | 0.0005 | 0.74 |
| 21 | ac | 15 | 80 | 5 | 60 | 40 | 0.0004 | 0.24 | 0.0004 | 0.0005 | 0.28 |
| 22 | m | 52 | 48 | 0 | 75 | 25 | 0.0001 | 0.18 | 0.0020 | 0.0022 | 0.30 |

[Table 3B]

| Test No. | Component | Microstructure of 1/4 Depth Position | | | Microstructure of Surface Layer Part | | 1/4 Depth Position | | Surface Layer Part | | |
|---|---|---|---|---|---|---|---|---|---|---|---|
| | | Ferrite and Bainite (%) | Martensite (%) | Pearlite and Residual γ (%) | Ferrite and Bainite (%) | Martensite, Pearlite, and Residual γ (%) | Number Density of Carbides Containing B (particles/μm²) | Number Density of AlN (particles/μm²) | Number Density of Carbides Containing B and Having Minor Axis of 0.2 μm or More (particles/μm²) | Number Density of Carbides Containing B and Having Minor Axis of 0.05 to 0.2 μm (particles/μm²) | Number Density of AlN (particles/μm²) |
| 23 | o | 75 | 25 | 0 | 85 | 15 | 0.0005 | 0.44 | 0.0006 | 0.0022 | 0.49 |
| 24 | p | 0 | 100 | 0 | 2 | 98 | 0.0022 | 0.57 | 0.0028 | 0.0032 | 0.95 |
| 25 | q | Fractured in Cold Rolling Step | | | | | | | | | |
| 26 | r | 80 | 20 | 0 | 85 | 15 | 0.0013 | 0.56 | 0.0021 | 0.0053 | 0.70 |
| 27 | s | 2 | 98 | 0 | 4 | 96 | 0.0015 | 0.53 | 0.0025 | 0.0025 | 0.89 |
| 28 | u | 68 | 32 | 0 | 98 | 2 | 0.0000 | 0.55 | 0.0000 | 0.0000 | 0.79 |
| 29 | v | 68 | 32 | 0 | 70 | 30 | 0.0056 | 0.40 | 0.0080 | 0.0080 | 0.58 |
| 30 | w | 34 | 66 | 0 | 56 | 44 | 0.0014 | 0.16 | 0.0018 | 0.0090 | 0.19 |
| 31 | x | 16 | 84 | 0 | 56 | 44 | 0.0013 | 0.37 | 0.0016 | 0.0016 | 0.53 |
| 32 | y | 4 | 96 | 0 | 45 | 55 | 0.0020 | 1.01 | 0.0022 | 0.0110 | 1.27 |
| 33 | z | 12 | 88 | 0 | 48 | 52 | 0.0011 | 0.13 | 0.0018 | 0.0018 | 0.18 |
| 34 | aa | 55 | 45 | 0 | 80 | 20 | 0.0072 | 0.00 | 0.0090 | 0.0450 | 0.00 |
| 35 | ab | 80 | 20 | 0 | 88 | 12 | 0.0013 | 0.37 | 0.0018 | 0.0018 | 0.46 |
| 36 | e | 2 | 98 | 0 | 72 | 28 | 0.0045 | 0.21 | 0.0075 | 0.0300 | 0.27 |
| 37 | e | Fractured in Cold Rolling Step | | | | | | | | | |
| 38 | f | 32 | 64 | 4 | 66 | 34 | 0.0070 | 0.15 | 0.0085 | 0.0255 | 0.21 |
| 39 | f | 52 | 48 | 0 | 70 | 30 | 0.0014 | 0.02 | 0.0020 | 0.0092 | 0.04 |
| 40 | g | 65 | 35 | 0 | 68 | 32 | 0.0018 | 0.35 | 0.0026 | 0.0130 | 0.39 |
| 41 | g | 80 | 20 | 0 | 35 | 65 | 0.0010 | 0.00 | 0.0018 | 0.0019 | 0.00 |

The underline indicates that the underlined item falls outside the scope of the present invention.

Microstructures of the obtained steel sheets were measured by the above-described method. The obtained results are shown in Tables 4A and 4B.

In addition, a tensile strength (TS) and bendability were evaluated in the following manner.

In addition, post-bending back crushing properties were evaluated as post-pressing crushing properties. In a case where the steel sheet is subjected to press working to manufacture, for example, a hat member, a corner part or the like of the hat member is bent back, and this part is particularly likely to become an origin where cracks start to occur. In a case where cracks rarely occur in the part bent back, the post-pressing crushing properties can be regarded as excellent. Therefore, the post-bending back crushing properties were evaluated as the post-pressing crushing properties.

The tensile strength (TS) was obtained by performing a tensile test according to JIS Z 2241: 2011 with a JIS No. 5 tensile test piece collected from the steel sheet in a direction perpendicular to a rolling direction.

In a case where the tensile strength was 980 MPa or more, the steel sheet was determined as having high strength and being acceptable. On the other hand, in a case where the tensile strength was less than 980 MPa, the steel sheet was determined as not having high strength and being unacceptable.

Bendability was evaluated based on a critical bending angle obtained by a bending test. The bending test was performed according to Verband der Automobilindustrie (VDA) 238-100.

The bending test was performed to obtain a critical bending angle (C-axis bending angle) $\theta_C$ in a case where a direction perpendicular to the rolling direction and the sheet thickness direction was defined as a bending ridge. Acceptance criteria for bendability were as follows according to the tensile strength of the steel sheet. In a case where the following acceptance criteria were satisfied, the steel sheet was judged to have excellent bendability and determined to be acceptable. On the other hand, in a case where the following acceptance criteria were not satisfied, the steel sheet was determined to be unacceptable.

Tensile strength of 1470 MPa or more: Acceptable when $\theta_C > 65°$
Tensile strength of 1180 MPa or more and less than 1470 MPa: Acceptable when $\theta_C > 75°$
Tensile strength of less than 1180 MPa: Acceptable when $\theta_C > 85°$

The post-bending back collapse properties (evaluation on whether voids or cracks had occurred after bending) were evaluated using a test piece stopped midway through the bending test. The same bending test as described above was performed, and with a test piece on which the bending had been stopped midway at a bending angle of 60°, a maximum value of the equivalent circle diameter of voids and a maximum value of the size of cracks were obtained in a region from the surface to 200 $\mu$m. The equivalent circle diameter of a void and the size of a crack were measured by the following methods. A surface of the test piece perpendicular to the bending ridge is etched with a Nital solution. The test piece is photographed within a range of 400 $\mu$m or more on either side of a bending apex and 200 $\mu$m deep in the sheet thickness direction at a magnification of 1000 to 3000 times by using a field emission scanning electron microscope (FE-SEM). The equivalent circle diameters of the voids present in the SEM photograph are calculated, and the maximum value thereof is regarded as the maximum value of the equivalent circle diameter of the voids. The method of calculating the equivalent circle diameter is not limited, but the equivalent circle diameter can be calculated by measuring the area of the void through an image binarization process or the like. As the size of the crack, the length of the crack present in the observation region is measured, and in a case where the crack is curved, a distance between the starting point and the end point of the crack is regarded as the crack size.

Acceptance/unacceptance criteria for the post-bending back collapse properties were as follows according to the tensile strength. In a case where the maximum value of the equivalent circle diameter of the voids and the maximum value of the size of the cracks satisfy the following acceptance criteria, the steel sheet was judged to have excellent post-pressing collapse properties and determined to be acceptable. On the other hand, in a case where the following acceptance criteria were not satisfied, the steel sheet was determined to be unacceptable.

Tensile strength of 1470 MPa or more: Acceptable when 5 $\mu$m or less is met
Tensile strength of 1180 MPa or more and less than 1470 MPa: Acceptable when 4 $\mu$m or less is met
Tensile strength of less than 1180 MPa: Acceptable when 3 $\mu$m or less is met

In the present examples, the reason why the acceptance criteria are changed according to the tensile strength as described above takes the following background into consideration.

In a case where the tensile strength is low, the absolute value of the critical bending angle increases, and the sizes of voids and cracks to be permitted decrease, even without special consideration as specified in the present embodiment. For example, in Comparative Examples Nos. 23, 26, 28, 35, 39, and 40, the absolute value of the critical bending angle and the sizes of the voids and cracks were at levels that were not inferior to those of the steel sheets according to the invention examples. However, the critical bending angle and the sizes of the voids and cracks in these comparative examples are only at good levels in terms of the absolute value since the steel materials have a relatively low tensile strength.

As can be seen from Tables 4A and 4B, all the invention examples had high strength, excellent bendability, and excellent post-pressing collapse properties.

[Table 4A]

| Test No. | Component | Expression (5) Total. N - N_nit (mass%) | Tensile Strength (MPa) | Hs/Hc | Sheet Thickness (mm) | Critical Bending Angle θ_c (°) | Evaluation of Post-Bending Back Collapse Properties | Remarks |
|---|---|---|---|---|---|---|---|---|
| 1 | a | 0.0002 | 1267 | 0.63 | 1.8 | 95 | OK | |
| 2 | b | 0.0000 | 1159 | 0.62 | 1.6 | 108 | OK | |
| 3 | c | 0.0000 | 1576 | 0.62 | 1.2 | 83 | OK | |
| 4 | d | 0.0003 | 1322 | 0.81 | 1.4 | 75 | OK | |
| 5 | e | 0.0003 | 1580 | 0.63 | 1.8 | 76 | OK | |
| 6 | f | 0.0003 | 1163 | 0.63 | 1.2 | 110 | OK | |
| 7 | g | 0.0002 | 1242 | 0.62 | 1.4 | 103 | OK | |
| 8 | h | 0.0004 | 1301 | 0.61 | 1.2 | 101 | OK | |
| 9 | i | 0.0003 | 1618 | 0.61 | 1.6 | 78 | OK | |
| 10 | j | 0.0004 | 1132 | 0.64 | 1.4 | 108 | OK | |
| 11 | k | 0.0003 | 1610 | 0.84 | 1.0 | 65 | OK | Invention Example |
| 12 | l | 0.0004 | 1591 | 0.61 | 1.2 | 83 | OK | |
| 13 | m | 0.0004 | 985 | 0.67 | 2.0 | 115 | OK | |
| 14 | n | 0.0004 | 1065 | 0.84 | 1.8 | 85 | OK | |
| 15 | a | 0.0002 | 1285 | 0.61 | 1.8 | 95 | OK | |
| 16 | c | 0.0003 | 1555 | 0.60 | 1.6 | 81 | OK | |
| 17 | e | 0.0003 | 1572 | 0.61 | 1.6 | 78 | OK | |
| 18 | h | 0.0004 | 1280 | 0.62 | 1.4 | 97 | OK | |
| 19 | m | 0.0004 | 995 | 0.61 | 2.0 | 110 | OK | |
| 20 | n | 0.0004 | 990 | 0.64 | 1.6 | 108 | OK | |
| 21 | ac | 0.0004 | 1315 | 0.64 | 1.8 | 80 | OK | |
| 22 | m | 0.0003 | 1005 | 0.64 | 1.8 | 100 | OK | |

[Table 4B]

| Test No. | Component | Expression (5) Total. N - N_nit (mass%) | Tensile Strength (MPa) | Hs/Hc | Sheet Thickness (mm) | Critical Bending Angle θ_c (°) | Evaluation of Post-Bending Back Collapse Properties | Remarks |
|---|---|---|---|---|---|---|---|---|
| 23 | o | 0.0003 | 692 | 0.65 | 1.6 | 105 | OK | |
| 24 | p | 0.0000 | 1875 | 0.71 | 1.2 | 62 | NG | |
| 25 | q | Fractured in Cold Rolling Step | | | | | | |
| 26 | r | 0.0000 | 809 | 0.65 | 1.6 | 97 | OK | |
| 27 | s | 0.0003 | 1533 | 0.79 | 1.2 | 68 | NG | |
| 28 | u | 0.0002 | 831 | 0.66 | 1.8 | 109 | OK | |
| 29 | v | 0.0000 | 888 | 0.70 | 1.6 | 87 | OK | |
| 30 | w | 0.0002 | 1395 | 0.65 | 1.6 | 86 | NG | |
| 31 | x | 0.0001 | 1500 | 0.67 | 2.0 | 73 | NG | Comparative Example |
| 32 | y | 0.0001 | 1508 | 0.67 | 1.2 | 81 | NG | |
| 33 | z | 0.0002 | 1559 | 0.63 | 1.6 | 79 | NG | |
| 34 | aa | 0.0014 | 906 | 0.67 | 1.2 | 110 | NG | |
| 35 | ab | 0.0030 | 961 | 0.63 | 1.4 | 103 | OK | |
| 36 | e | 0.0003 | 1580 | 0.64 | 1.6 | 76 | NG | |
| 37 | e | Fractured in Cold Rolling Step | | | | | | |
| 38 | f | 0.0003 | 1192 | 0.65 | 1.8 | 86 | NG | |
| 39 | f | 0.0010 | 962 | 0.66 | 2.0 | 116 | NG | |
| 40 | g | 0.0002 | 889 | 0.65 | 1.8 | 92 | OK | |
| 41 | g | 0.0012 | 860 | 0.85 | 2.0 | 69 | OK | |

The underline indicates that the underlined item falls outside the scope of the present invention, and the characteristic value is not preferable.

**Claims**

1. A steel sheet comprising, as a chemical composition, by mass%:

C: 0.07% to 0.25%;
Si: 0.01% to 2.00%;
Mn: 1.5% to 3.5%;
Al: 0.001% to 2.000%;
B: 0.0003% to 0.0100%;
P: 0.100% or less;
S: 0.0500% or less;
N: 0.0005% to 0.0100%;
O: 0.0060% or less;
Cr: 0% to 2.000%;
Mo: 0% to 1.000%;
W: 0% to 1.000%;
Co: 0% to 0.500%;
Nb: 0% to 0.50%;
Ti: 0% to 0.5000%;
V: 0% to 0.500%;
Ta: 0% to 0.100%;
Sn: 0% to 0.050%;
Sb: 0% to 0.050%;
As: 0% to 0.050%;
Ni: 0% to 1.000%;
Cu: 0% to 1.000%;
Ca: 0% to 0.050%;
Zr: 0% to 0.0500%;
Mg: 0% to 0.050%;
REM: 0% to 0.100%, and
a remainder comprising Fe and impurities,
wherein the chemical composition satisfies Expressions (1), (2), (3), and (4),
in a case where an N content in the chemical composition is denoted by Total. N and an N content in nitrides is denoted by $N_{nit}$, Expression (5) is satisfied,
in a microstructure at a 1/4 depth position that is a position away from a surface by 1/4 of a sheet thickness along a sheet thickness direction, by area ratio,
a total of ferrite and bainite is 0% to 60%,
martensite is 40% to 100%, and
a total of pearlite and residual austenite is 0% to 10%, and
in a case where a region from the surface to 30 $\mu$m along the sheet thickness direction is defined as a surface layer part, in the surface layer part,
a number density of carbides containing B and having a minor axis of 0.2 $\mu$m or more is 0.0030 particles/$\mu$m2 or less,

$$ex.\ N = [N] - [Ti]/3.4 > 0.0000\ mass\%...(1),$$

$$ex.\ N - 14/27 \times [Al] < 0.000\ mass\%...(2),$$

$$[B] - 10.8/14 \times ex.\ N < 0.0003\ mass\%...(3),$$

$$[Al] - 0.01 \times ex.\ N - 0.849 < 0.000\ mass\%...(4),$$

and

$$Total.\ N - N_{nit} \leq 0.0005\ mass\%...(5),$$

in Expressions (1), (2), (3), and (4), each of [N], [Ti], [Al], and [B] denotes an amount of the corresponding element by mass%, and is substituted with 0 in a case where the corresponding element is not contained.

2. The steel sheet according to Claim 1,

   wherein, in a microstructure of the surface layer part, by area ratio, a total of ferrite and bainite is 2% or more, and a total of one or two or more of martensite, pearlite, and residual austenite is 0% to 98%, and
   Hs/Hc that is a ratio of Vickers hardness Hs of the surface layer part to Vickers hardness Hc of the 1/4 depth position is 0.65 or less.

3. The steel sheet according to Claim 1 or 2,
   wherein a number density of AlN in the surface layer part is 0.01 particles/$\mu$m$^2$ or more.

4. The steel sheet according to Claim 1 or 2,
   wherein a tensile strength is 980 MPa or more.

5. The steel sheet according to Claim 1 or 2,

   wherein the chemical composition comprises, by mass%, one or two or more of
   Cr: 0.001% to 2.000%,
   Mo: 0.010% to 1.000%,
   W: 0.001% to 1.000%,
   Co: 0.010% to 0.500%,
   Nb: 0.01% to 0.50%,
   Ti: 0.0001% to 0.5000%,
   V: 0.001% to 0.500%,
   Ta: 0.001% to 0.100%,
   Sn: 0.001 % to 0.050%,
   Sb: 0.001% to 0.050%,
   As: 0.001% to 0.050%,
   Ni: 0.001 % to 1.000%,
   Cu: 0.001% to 1.000%,
   Ca: 0.001% to 0.050%,
   Zr: 0.0001 % to 0.0500%,
   Mg: 0.001% to 0.050%, and
   REM: 0.001 % to 0.100%.

6. The steel sheet according to Claim 1 or 2,
   wherein a hot-dip galvanized layer is provided on the surface.

7. The steel sheet according to Claim 1 or 2,
   wherein a hot-dip galvannealed layer is provided on the surface.

8. A manufacturing method of a steel sheet comprising:

   a hot rolling step of heating a slab comprising, as a chemical composition, by mass%,
   C: 0.07% to 0.25%;
   Si: 0.01% to 2.00%;
   Mn: 1.5% to 3.5%;
   Al: 0.001% to 2.000%;
   B: 0.0003% to 0.0100%;
   P: 0.100% or less;
   S: 0.0500% or less;
   N: 0.0005% to 0.0100%;
   O: 0.0060% or less;
   Cr: 0% to 2.000%;
   Mo: 0% to 1.000%;
   W: 0% to 1.000%;

Co: 0% to 0.500%;
Nb: 0% to 0.50%;
Ti: 0% to 0.5000%;
V: 0% to 0.500%);
Ta: 0% to 0.100%;
Sn: 0% to 0.050%;
Sb: 0% to 0.050%;
As: 0% to 0.050%;
Ni: 0% to 1.000%;
Cu: 0% to 1.000%;
Ca: 0% to 0.050%;
Zr: 0% to 0.0500%;
Mg: 0% to 0.050%;
REM: 0% to 0.100%, and
a remainder comprising Fe and impurities, the chemical composition satisfying Expressions (1), (2), (3), and (4), and performing hot rolling under a condition in which a total time in a temperature range of 950°C to 700°C is 5 s or longer to obtain a hot-rolled steel sheet;
a coiling step of coiling the hot-rolled steel sheet at a coiling temperature of 600°C to 450°C after the hot rolling step;
a cold rolling step of performing cold rolling on the hot-rolled steel sheet with a sheet thickness reduction of 20% to 80% after the coiling step to obtain a cold-rolled steel sheet; and
an annealing step of annealing the cold-rolled steel sheet by raising a temperature to an annealing temperature of 740°C to 900°C in an atmosphere having a dew point of -40°C to 20°C after the cold rolling step so that an average rising rate in a temperature range of 550°C to 650°C is 0.5 to 5.0 °C/s,

$$ex. \; N = [N] - [Ti]/3.4 > 0.0000 \; mass\% ...(1),$$

$$ex. \; N - 14/27 \times [Al] < 0.000 \; mass\% ...(2),$$

$$[B] - 10.8/14 \times ex. \; N < 0.0003 \; mass\% ...(3),$$

and

$$[Al] - 0.01 \times ex. \; N - 0.849 < 0.000 \; mass\% ...(4),$$

in Expressions (1), (2), (3), and (4), each of [N], [Ti], [Al], and [B] denotes an amount of the corresponding element by mass%, and is substituted with 0 in a case where the corresponding element is not contained.

## INTERNATIONAL SEARCH REPORT

| | International application No. |
|---|---|
| | **PCT/JP2023/045025** |

### A. CLASSIFICATION OF SUBJECT MATTER

***C22C 38/00***(2006.01)i; ***C21D 9/46***(2006.01)i; ***C22C 38/60***(2006.01)i
FI:   C22C38/00 301S; C22C38/00 301T; C22C38/60; C21D9/46 G; C21D9/46 J

According to International Patent Classification (IPC) or to both national classification and IPC

### B. FIELDS SEARCHED

Minimum documentation searched (classification system followed by classification symbols)

C22C38/00; C21D9/46; C22C38/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/080497 A1 (NIPPON STEEL CORPORATION) 21 April 2022 (2022-04-21) | 1-8 |
| A | JP 2017-520681 A (ARCELORMITTAL) 27 July 2017 (2017-07-27) | 1-8 |
| A | WO 2016/120914 A1 (JFE STEEL CORPORATION) 04 August 2016 (2016-08-04) | 1-8 |
| A | WO 2015/093043 A1 (JFE STEEL CORPORATION) 25 June 2015 (2015-06-25) | 1-8 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/045025**

| Patent document cited in search report | | | Publication date (day/month/year) | Patent family member(s) | | | Publication date (day/month/year) |
|---|---|---|---|---|---|---|---|
| WO | 2022/080497 | A1 | 21 April 2022 | EP | 4186987 | A1 | |
| | | | | CN | 116018416 | A | |
| | | | | KR | 10-2023-0059822 | A | |
| JP | 2017-520681 | A | 27 July 2017 | US | 2017/0137906 | A1 | |
| | | | | WO | 2015/185956 | A1 | |
| | | | | KR | 10-2017-0015303 | A | |
| | | | | CN | 106471147 | A | |
| WO | 2016/120914 | A1 | 04 August 2016 | KR | 10-2017-0096197 | A | |
| | | | | CN | 107208234 | A | |
| WO | 2015/093043 | A1 | 25 June 2015 | US | 2016/0319385 | A1 | |
| | | | | EP | 3054025 | A1 | |
| | | | | CN | 105814227 | A | |
| | | | | KR | 10-2016-0101095 | A | |

Form PCT/ISA/210 (patent family annex) (July 2022)

**Patent documents cited in the description**

- JP 2022200162 A
- WO 2020196060 A